# EUROPEAN PATENT APPLICATION

(11) **EP 4 332 617 A1**
(43) Date of publication of application: **06.03.2024**
(21) Application number: 22794214.1
(22) Date of filing: 24.01.2022
(51) Int. Cl.: G01S 7/481, G01S 7/484, G01S 7/486, G01S 17/08

(54) **OPTICAL DETECTION DEVICE, DRIVING VEHICLE, LASER RADAR AND DETECTION METHOD**

(30) Priority: 30.04.2021 CN 202110489208; 30.04.2021 CN 202110477383; 30.04.2021 CN 202120917490 U
(71) Applicant: Hesai Technology Co., Ltd., Shanghai 201821 (CN)
(72) Inventor: ZHU, Xuezhou, Shanghai 201821 (CN); XIANG, Shaoqing, Shanghai 201821 (CN)
(74) Representative: Appelt, Christian W.
(86) International application number: PCT/CN2022/073477
(87) International publication number: WO 2022/227733

(57) **Abstract**

This disclosure provides a light detection device and a driving vehicle. The light detection device includes: a window; a light transmisstion end configured to output an transmission signal; a light detecting end configured to detect the echo signal of the transmission signal; and optical signal redirection component configured to deflect the transmission signal through movement, so that the transmission signal emerges from the window of the light detection device to enable scanning of the field of view in the second direction and redirect the echo signal, whereby the echo signal is transmitted to the light detecting end. The optical path for transmission signal and the optical path for echo signal overlap at least between the window and the optical signal redirection component. In the embodiment of this disclosure, by arranging the emission end and receiving end to the left and right relative to each other instead of stacking them on top of each other, the height of the device can be maintained or even decreased without affecting the detection performance, and the short-range blind zone can be reduced.

## Description

### TECHNICAL FIELD

This disclosure relates to the field of optical ranging technologies, and in particular to a light detection device and a traveling vehicle.

### BACKGROUND

LiDAR is a device that achieves external detection by emitting laser and receiving echo signals obtained when the laser reaches the surface of an object and returns. LiDAR used in autonomous vehicles needs to meet many parameter requirements, including high density of point cloud, wide field of view, no blind area, high refresh frequency, small size, low energy consumption, low price, etc.

Generally, LiDAR is arranged by stacking an transmitting module and a receiving module on top of each other, where the transmitting module includes a laser, and the receiving module includes a detector.

However, such a solution causes many problems. First of all, this type of LiDAR is bulky and difficult to be concealed in the usual installation spaces in the vehicle, such as in the headlights of a vehicle or in the ceiling of a vehicle. When the receiving module and the transmitting module are stacked on top of each other, it is difficult to reduce the total height of the LiDAR product since the total height of the product needs to be greater than the total height of the two modules stacked. Forcibly lowering the LiDAR's height will cause the compromises of parameters such as the LiDAR's field of view or the number of beams; and accordingly, the amount of echo signals that may be received by the detector is reduced, compromising the signal-to-noise ratio parameters. In other words, data such as the distance from and reflectivity of the object detected by the LiDAR are inaccurate and the LiDAR's performance is deteriorate. In this case, it is impossible to realize a LiDAR with a large number of beams, such as a LiDAR with more than 32 beams (such as 32 beams, 64 beams, 128 beams, etc.).

Secondly, this type of LiDAR has the problem of short-range blind zone. Since the transmitting module and the receiving module are arranged one above the other, most of the echo signals obtained by reflection from the laser emitted by the laser fall outside the field of view of the detector, when detecting objects within a relatively short distance from the LiDAR. As a result, the detector of the LiDAR cannot receive the echo signal or the received echo signal is extremely weak, resulting in a short-range blind zone.

### SUMMARY

In view of the above-mentioned disadvantages of the prior art, this disclosure provides a light detection device and a traveling vehicle to solve the problems of the prior art.

In order to achieve the above objectives and other relevant objectives, the first aspect of this disclosure provides a light detection device, comprising: a window; a light transmitting end comprising a light emitter array configured to output an transmission signal, the light emitter array comprising N columns of light emitters that are staggered from each other, and each column of the light emitters extending in a first direction, where N>1; a light detecting end comprising a light detector array configured to detect an echo signal of the transmission signal after being reflected off an obstacle; the light detector array comprising M columns of light detectors staggered from each other, and each column of light detectors extending in the first direction, where M>1; the light emitter array and the light detector array constituting a plurality of detection channels to scan a field of view in the first direction, and each of the detection channels comprising at least one light emitter and at least one light detector, each of the detection channels corresponding to one field of view in the first direction; and an optical signal redirection component configured to deflect the transmission signal through movement, such that the transmission signal emerges from the window of the light detection device to scan a field of view in a second direction and redirect the echo signal to transmit the echo signal to the light detecting end; wherein an optical path for the transmission signal and an optical path of the echo signal overlap at least between the window and the optical signal redirection component.

According to some embodiments of the first aspect, the light emitter in the light emitter array is a vertical cavity surface emitting laser provided with a micro-lens array for collimating the transmission signal.

According to some embodiments of the first aspect, each of the light emitters comprises a plurality of light-transmitting units, and the micro-lens units in the micro-lens array correspond to the light-transmitting units in a one-to-one correspondence and match in shape.

According to some embodiments of the first aspect, the micro-lens array is arranged separately with respect to the light emitter, or is imprinted on a light emitting surface of the light emitter.

According to some embodiments of the first aspect, the light emitter is a Back-Side Illumination semiconductor structure, and the micro-lens array is imprinted on a surface of a substrate of the semiconductor structure.

According to some embodiments of the first aspect, in a signal transmission process from sending the transmission signal to detecting the corresponding echo signal, a plurality of optical signal transmission detection channels in an operation state are respectively formed between a plurality of light emitters activated in the light emitter array and a plurality of light detectors activated in the light detector array; the light emitter array comprises a plurality of banks of light emitters and/or the light detector array comprises a plurality of banks of light detectors; the activated light emitters respectively belong to different banks of light emitters and/or the activated light detectors respectively belong to different banks of light detectors.

According to some embodiments of the first aspect, each light emitter in each bank of light emitters and/or each light detector in each bank of light detectors is activated in turn during a plurality of signal transmission processes.

According to some embodiments of the first aspect, after performing a long-range measurement in a preset number of signal transmission processes, the light detection device performs a short-range measurement in the next signal transmission process.

According to some embodiments of the first aspect, a first number of light emitters in a middle area of the light emitter array in the first direction are activated during the long-range measurement, and a second number of light emitters are activated during the short-range measurement, wherein the first number is greater than the second number.

According to some embodiments of the first aspect, there are a plurality of detection distances corresponding to the long-range measurement, and wherein the closer a position of the activated light emitter in the light emitter array to the center, the farther the corresponding expected detection distance.

According to some embodiments of the first aspect, the signal characteristics of the optical signals transmitted in respective detection channels operating in the same signal transmission process are different.

According to some embodiments of the first aspect, the transmission signal comprises one or more pulse signals, and dimensions of the signal characteristics comprise one or any combination of: wavelength, pulse width, pulse number, pulse peak and pulse time interval.

According to some embodiments of the first aspect, the light emitter array and the light detector array are cooperatively configured to reach an number of beams equal to or more than 32 beams.

According to some embodiments of the first aspect, the optical signal redirection component comprises: a rotating member controlled to rotate and comprising at least one reflective surface adapted to receive echo signals and/or output transmission signals; a first redirecting member located in the optical path for the transmission signal and the optical path for the received signal, configured to output one of the transmission signal and the echo signal to the rotating member, provided with a passage portion to allow the other of the echo signal and the transmission signal to pass therethrough.

According to some embodiments of the first aspect, the passage portion comprises one or more gaps formed on the side and/or in the middle of the first redirecting member.

According to some embodiments of the first aspect, the first redirecting member comprises: a first area for outputting the transmission signal to the rotating member, and a second area outside the first area for transmitting the echoe signal.

According to some embodiments of the first aspect, the light detection device further comprises: a light shielding member disposed on a propagation path of the transmission signal that transmits the first redirecting member.

According to some embodiments of the first aspect, at least a portion of an end surface of an end of the first redirecting member away from the rotating member is configured as a first reflective surface; a first preset included angle between the first reflective surface and an axis of a first optical path segment leading to the first redirecting member in the optical path for the transmission signal are configured to deviate a optical signal transmitted along the first optical path segment from the optical path for the received signal; and/or, at least part of the end surface of the end of the first redirecting member away from the rotating member is configured as a second reflective surface; a second preset included angle between the second reflective surface and an axis of a second optical path segment starting from the first redirecting member in the optical path for received signal are configured to deviate the optical signal transmitted along the second optical path segment from the optical path for the transmission signal.

According to some embodiments of the first aspect, an end surface of an end of the first redirecting member close to the rotating member is configured to be parallel to an axial direction of the optical path segment of the optical path for the received signals between the rotating member and the first redirecting member.

According to some embodiments of the first aspect, the rotating member comprises two or more than two reflective surfaces.

According to some embodiments of the first aspect, the first redirecting member is packaged in a first sheath, and the first sheath extends toward the light transmitting end along the optical path for transmission signal.

According to some embodiments of the first aspect, the size of the first redirecting member is proportional to a divergence angle of an emergent beam and inversely proportional to a cross section of the echo beam.

According to some embodiments of the first aspect, the light detection device comprises: a transceiver lens, arranged between the rotating member and the first redirecting member, for converging the echo signals from one side of the rotating member and transmitting them toward the passage portion of the first redirecting member and allowing the transmission signals from a side of the first redirecting member to pass therethrough.

According to some embodiments of the first aspect, the light transmitting end corresponds to an end of a second sheath, and the second sheath extends toward the first redirecting member along the optical path for the transmission signal, and forms a light output port at the other end thereof; and/or, the light detecting end corresponds to an end of a third sheath, and the third sheath extends toward the first redirecting member along the optical path for the received signal, and forms a light input port at the other end thereof.

According to some embodiments of the first aspect, the light detection device comprises: a second lens disposed in the optical path for the received signals and located between the light detecting end and the first redirecting member.

According to some embodiments of the first aspect, the second lens is erected along a direction with a predetermined deviation angle relative to a longitudinal direction of the light detection device to deflect light incident at a marginal FOV angle to deviate from the light detector array.

According to some embodiments of the first aspect, the light detection device comprises a control module for compensating the echo signal received from a light transmission detection channel corresponding to the corresponding FOV angle away from the rotating member.

According to some embodiments of the first aspect, the light detection device is a forward-facing LiDAR, where M=N>32.

In order to achieve the above objectives and other relevant objectives, the second aspect of this disclosure provides a traveling vehicle, comprising the light detection device as described in the first aspect..

According to some embodiments of the second aspect, the traveling vehicle is a car, and the light detection device is a forward-facing LiDAR installed on a front of the vehicle.

In summary, this disclosure provides a light detection device and a traveling vehicle. The light detection device includes: a window; a light transmitting end configured to output an transmission signal; a light detecting end configured to detect the echo signal of the transmission signal; and optical signal redirection component configured to deflect the transmission signal through movement, so that the transmission signal emerges from the window of the light detection device to schieve scanning of the field of view in the second direction and redirect the echo signal, whereby the echo signal is transmitted to the light detecting end. The optical path for transmission signal and the optical path for echo signal overlap at least between the window and the optical signal redirection component. In the embodiment of this disclosure, the optical paths for the transmission signal and the echo signal are overlapped, without being limited by stacking the transmitting module and the receiving module on top of each other. The height of the device can be effectively reduced without affecting the detection performance, and the overlapping of the optical paths for the transmission signal and the echo signal can eliminate short-range blind zone.

### BRIEF DESCRIPTION OF THE DRAWINGS

FIG. 1 shows a schematic structural diagram of a LiDAR of rotating mirror type in an example.
FIG. 2A shows a schematic diagram of an optical path of the LiDAR during detection in an example.
FIG. 2B shows a schematic diagram of the principle of a short-range blind zone in an example.
FIG. 3A shows a schematic top perspective view of a structure of a light detection device according to an embodiment of this disclosure.
FIG. 3B shows a schematic diagram of an arrangement structure of a light emitter array in front view according to an embodiment of this disclosure.
FIG. 3C is a schematic left partial structural diagram of FIG. 3B.
FIG. 4A shows a schematic top perspective view of a structure of a light detection device according to a specific embodiment of this disclosure.
FIG. 4B shows a schematic top perspective view of a structure of a light detection device with the rotating member of a varying shape according to another specific embodiment of this disclosure.
FIG. 4C shows a schematic side view of a structure of the light detection device in FIG. 4A.
FIG. 5 shows a schematic top perspective view of a structure of a light detection device according to a first modified example of this disclosure.
FIG. 6 shows a schematic top perspective view of a structure of a light detection device according to a second modified example of this disclosure.
FIG. 7 shows a schematic plan view of a first redirecting member according to a third modified example of this disclosure.
FIG. 8 shows a partial structural diagram including a first redirecting member and a rotating member according to an embodiment of this disclosure.
FIG. 9 shows a schematic structural diagram of the first redirecting member according to a fourth modified example of this disclosure.
FIG. 10 shows a schematic top diagram of a structure of a light detection device according to another embodiment of this disclosure.
FIGs. 11A and 11B show schematic top perspective views of structure of a light detection device according to two other specific embodiments of this disclosure.
FIG. 12A shows a schematic structural diagram of dividing light emitters into banks according to the example of FIG. 3B.
FIG. 12B shows a schematic waveform diagram using the pulse width as the signal characteristic of the corresponding detection channel according to an embodiment of this disclosure.
FIG. 12C shows a schematic waveform diagram using the pulse time interval as the signal characteristic of the corresponding detection channel according to an embodiment of this disclosure.
FIG. 13A shows a schematic structural diagram of a micro-lens array according to an embodiment of this disclosure.
FIG. 13B shows a schematic structural diagram of a micro-lens array according to another embodiment of this disclosure.
FIG. 14A shows a schematic top perspective structural diagram illustrating a window structure of a light detection device according to an embodiment of this disclosure.
FIG. 14B shows a schematic three-dimensional structural view of the window structure of the light detection device in FIG. 14A.
FIG. 15 shows a schematic diagram of frame splicing for scanning through frame splicing in the prior art;
FIG. 16 shows a schematic diagram of two-dimensional scanning without frame splicing;
FIG. 17 shows a schematic diagram of a LiDAR according to an embodiment of this disclosure;
FIG. 18 shows a block diagram of a LiDAR according to an embodiment of this disclosure;
FIG. 19 shows a schematic diagram of a rotating mirror unit according to an embodiment of this disclosure;
FIG. 20 shows an exploded view of a rotating mirror unit according to one embodiment of this disclosure;
FIG. 21 shows a schematic diagram of a rotating mirror unit according to another embodiment of this disclosure;
FIG. 22A shows a schematic diagram of the detection beam when a double-sided rotating mirror is at a starting scanning position according to one embodiment of this disclosure;
FIG. 22B shows a schematic diagram of the echo when the double-sided rotating mirror of FIG. 22A is at the starting scanning position;
FIG. 23A shows a schematic diagram of the detection beam when the double-sided rotating mirror is at an ending scanning position according to an embodiment of this disclosure;
FIG. 23B shows a schematic diagram of the echo when the double-sided rotating mirror of FIG. 23A is at the ending scanning position;
FIGs. 24A and 24B show a schematic diagram of a microlens disposed on a laser according to an embodiment of this disclosure;
FIG. 25A shows a schematic diagram of a microlens structure disposed on the light emitting point of the laser according to an embodiment of this disclosure, and FIG. 25B shows the preferred size relationship of the embodiment of FIG. 25A;
FIG. 26 shows a schematic diagram of a microlens structure disposed on the light emitting point of a laser according to another embodiment of this disclosure;
FIG. 27 shows a schematic diagram of motion distortion produced when using a single beam for two-dimensional scanning; and
FIG. 28 shows a schematic diagram of the motion distortion produced when using multiple beams for one-dimensional scanning.

### DETAILED DESCRIPTION

The embodiments of this disclosure are described below through specific examples. Those skilled in the art can easily understand other advantages and effects of this disclosure from the content disclosed in this specification. The system of this disclosure can also be implemented or applied through other different specific implementations. Various details in this specification can also be modified or changed in various ways based on different viewpoints and application systems without departing from the spirit of this disclosure. It should be noted that, as long as there is no conflict, the embodiments and features in the embodiments of this disclosure can be combined with each other.

The embodiments of this disclosure are described below in detail with reference to the drawings, so that those skilled in the art may implement this disclosure easily. This disclosure may be embodied in many different ways, which are not limited ot the embodiments described here.

In order to clarify this disclosure, some irrelevant components are omitted. Same or similar elements throughout the specification are denoted by the same reference numeral.

Throughout the specification, when it is described that some component is "connected" with another component, this covers "direct connection" and also "indirect connection" inn which other element is provided therebetween. Furthermore, when it is described that some component "includes" a certain element, this does not exclude other elements, but means that it may includes other elements, unless specified otherwise.

When it is described that a component is on/above another component, this may means that the component is immediately on/above the another componenet, and may also means that there is other component therebetween. When it is described that the component is directly or immediately on/above the another component, there is no other component therebetween.

Although the terms "first" or "second" are used to describe various elements in some embodiments, those elements should not be limited by such terms. These terms are used soly to distinguish one element from another element, for example, a first interface and a second interface. Furthermore, as used in the specification, singular form "a", "an", "one" and "the" intend to include plural form, unless specified otherwise in the context. It shall be understood that the terms "include" and "comprise" indicates that the recited features, steps, operations, elements, components, projects, types and/or groups are present, but this does not exclude the presence, appearance or addition of one or more other features, steps, operations, elements, components, projects, types and/or groups. The terms "or" and "and/or" used here shall be interpreted as inclusive, or refer to any one of them or any combination. Therefore, the expression "A, B or C" or the expression "A, B and/or C" include any of the following: A; B; C; A and B; A and C; B and C; A, B and C. Only when there are some implicit conflicts in the combination of the elements, functions, steps or operations in certain ways, the exception of the above definition may appear.

Those technical terms used here only apply to the specific embodiments, and do not intend to limit this disclosure. The singular form used here also covers plural form, unless spcifiec otherwise clearly. The term "include" used in the specification means to specify those specific characteristics, regions, integers, steps, tasks, elements and/or components, and does not exclude the addition or precence of other characteristics, regions, integers, steps, tasks, elements and/or components.

Terminologies describing relative spatial positions, such as "on" and "below", are used to make it easier to describe the relationship of a device illustrated in the drawings relative to another device. Those terminologies not only have the meanings indicated in the drawings, but also have other meanings or tasks of the device in use. For example, if the device in the drawings is overturned, a componenet that was described to be below another component are described to be on/above the another component. Therefore, such exemplary terminologies as "below", covers above and below. The device can be rotated 90 degree or other degree, and terminologies indicating relative spatial relationship may be explained in accordingly.

All the terminologies, such as the technical terminologies and scientific terminologies used here, have the same meaning as what those skilled in the art may understand, although there is no different different definition. Supplemental explanation about a term in an ordinary dictionary has a meaning complying with relevant technical articals and contents in the present prompt, and it shall not be unduely explained as having a ideal or very formula meaning, as long as it is not defined.

### First Aspect

A LiDAR generally uses a configuration in which an transmitting module and a receiving module are stacked on top of each other.

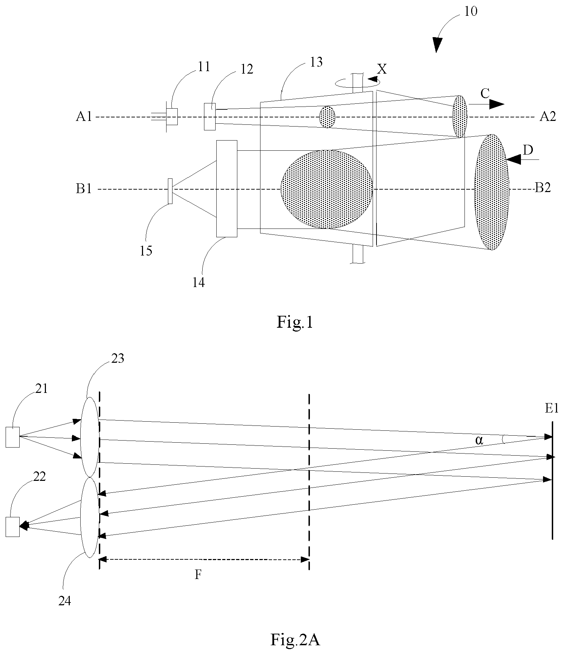

Take a LiDAR of rotating mirror scanning as an example. Referring to FIG. 1, a schematic structural diagram of a LiDAR of rotating mirror type according to an example is shown.

The LiDAR 10 of rotating mirror scanning includes a single laser 11, an transmitting lens 12, a rotating mirror 13, a receiving lens 14 and a single light detector 15. Among them, the laser 11 and the light detector 15 are stacked on top of each other. The laser 11 is located above and is configured to emit light and emit laser light as an transmission signal. The central axis of a light-emitting surface of the laser 11 is marked as A1. The light detector 15 is located below the laser 11 and is configured to receive the beam of an echo signal of the transmission signal. The central axis of the receiving surface of the light detector 15 is marked as B1. The transmitting lens 12 is configured to perform processings such as collimation on the transmission signal passing therethrough, and the receiving lens 14 is configured to converge the echo signal passing therethrough onto the light detector 15.

The rotating mirror 13 can be controlled to rotate, and is shown in the figure to be able to rotate in the counterclockwise direction of the X arrow. In this example, the size of the rotating mirror 13 is designed to be relatively large, so that the transmission signal and the echo signal can be transmitted respectively in different areas on one surface or on multiple surfaces, and the transmission signal emitted by the laser 11 is transmitted toward the rotating mirror 13 through the transmission lens 12. Coopertively, the rotating mirror 13 is rotated to a predetermined position so that one surface of the rotating mirror 13 receives the transmission signal, which is reflected and then emitted to the external environment along arrow C. The optical axis of the transmitting optical path is marked as A2. Correspondingly, the echo signal passes through the receiving lens 14 and then is incident on the light detector 15 in the optical path with the optical axis B2 along the arrow D. In the figure, the optical axes B2 and B 1 are connected. The dotted shading in the figure schematically represents the light spots generated by the light beams.

It can be understood from the illustration that because the height of the entire LiDAR must be at least equivalent to the total height of the laser 11 and the light detector 15, the structure in which the laser 11 and the light detector 15 are stacked on top of each other suffers from the difficulty in reducing the height. Moreover, in this example, the size of the rotating mirror 13 must be made relatively large in cooperation with this structure to cover the incident points of the transmission signal and the echo signal, which increases the size of the entire LiDAR of rotating mirror scanning. If the size of the LiDAR of rotating mirror scanning is reduced, it inevitably reduces the effective aperture of the LiDAR for transmitting and receiving, reduce the LiDAR's FOV angle, and lead to a significant deterioration in the LiDAR's performance. In addition, the solution shown in FIG. 1 cannot meet the demand for LiDAR products with a large number of beams (such as 32 or more beams, for example, 32 beams, 64 beams, and 128 beams) that are mainstream in the future autonomous driving field.

In addition, this vertically stacked structure also causes the problem of blind spots in short-range detection.

As shown in FIG. 2A, a schematic diagram of the optical path of the LiDAR during detection process in an example is shown.

In the case of the LiDAR adopting the solution in which the transmitting module 21 and the receiving module 22 are stacked on top of each other, the field of view of the receiving module 22 are configured to receive the echo signal of the reflected transmission signal at a remote distance (for example, 200 meters away from the LiDAR, etc., as indicated by the rightmost vertical solid line shown in FIG. 2A) in order to detect the object E1 at the remote distance. Therefore, within a certain distance close to the LiDAR (such as several meters, more than ten meters or tens of meters), the transmission signal sent by the transmitting module 21 is transmitted through the transmitting lens 23 and may fall outside the field of view (FOV) of the receiving module 22, which may lead to a fact that the receiving module 22 may not receive the echo signal reflected off the object or the received echo signal is extremely weak, thus forming a short-range blind zone. In FIG. 2A, the short-range blind zone is schematically represented by an area F between the two dotted lines.

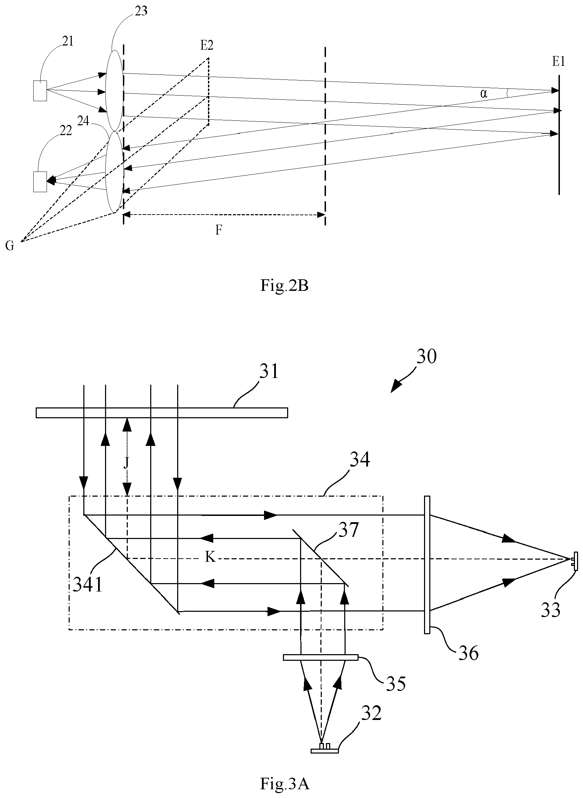

Referring to FIG. 2B for details, it is assumed that there is an object E2 in the area A. When the transmission signal is incident on the object E2 and is reflected to form an echo signal, an imaging point G formed by the echo signal through the receiving lens 24 is not located on a focal plane of the receiving lens 24, but behind the focal plane. In addition, because the short-range object is above the optical axis of the receiving lens 24, the image point formed by it through the receiving lens 24 must be below the optical axis of the receiving lens 24. Combining these two factors, it can be seen that the position of the imaging point G of the short-range object E2 is completely offset relative to the receiving module 22, resulting in the receiving module 22 of the LiDAR being not able to receive the reflected signal from the object at all.

The reason for the above-mentioned short-range blind zone is that there is an angle between the optical axes of the optical path for transmission signal and the optical path for received signal of the echo signal, as shown by α in FIG. 2A. Such an optical path structure may also be called a " paraxial".

In addition to the above, this type of paraxial optical path structure also affects the performance of LiDAR's signal detection, causing differences among detection channels, for example. First, the "detection channel" is defined. If the LiDAR is equipped with multiple lasers or is a multi-beam LiDAR, then each row/column of light emitters can extend along a certain direction, and similarly, each row/column of light detectors can extend along a certain direction, which together constitute a scanning of the field of view corresponding to the extension direction (for example, the column direction corresponds to the vertical field of view, the row direction corresponds to the horizontal field of view, etc.). The measurement dimension of Field Of View (FOV) is often called the FOV angle. For example, the horizontal FOV is 100° and the vertical FOV is 120°. Each detection channel may include at least one laser and at least one detector, and each detection channel corresponds to a field of view in a certain direction (for example, it may be a vertical field of view or a horizontal field of view). In other words, one detection channel can be composed of multiple lasers and one detector, can be composed of one laser and multiple detectors, or can be composed of one laser and one detector. In other words, one or more lasers plus one or more corresponding light detectors constitute a detection channel. The "corresponding" here refers to the corresponding relationship between the laser that emits the transmission signal and the optical detector that receives the echo signal of the transmission signal, that is, the lasers and light detectors corresponding to the same detection field of view. For example, a laser and a detector constitute a detection channel of the LiDAR. Multiple detection channels means "multiple beams" in the field of LiDAR.

Due to the paraxial optical path structure in FIG. 2A, the position and orientation of respective detection channel relative to the same obstacle vary, which causes the optical response curves of each channel (such as indicating the relationship between light intensity and distance from the object) to be different. The difference is significant, and finally it also makes it difficult to measure the distance from obstacles and reflectivity of obstacles based on the echo signals.

In view of various problems in the above examples, embodiments of this disclosure provide a light detection device that innovatively abandons the paraxial optical path and uses at least partially overlapping receiving and transmitting optical paths to solve the above problems.

As shown in FIG. 3A, a schematic top perspective view of the structure of a scanning light detection device with a large number of beams (the number of beams may be equal to or greater than 32) in an embodiment of this disclosure is shown.

An internal perspective structure of the light detection device in a transverse plane is shown in FIG. 3A from a top view. For the sake of clarity, a housing of the light detection device is not shown in the figure. The transverse plane may be a plane perpendicular to the height direction of the light detection device, which may be, for example, a horizontal plane or other plane.

The light detection device 30 includes a window 31, through which the transmission signal is sent and the echo signal is received. The echo signal is formed by the transmission signal after reflected by an obstacle. For example, a flat window glass may be installed at the window 31. In other embodiments, the window 31 may also have a curved structure. The light detection device 30 includes a light transmitting end 32 and a light detecting end 33. The light transmitting end 32 is configured to output an transmission signal, and the light detecting end 33 is configured to detect an echo signal of the transmission signal. For example, a space may be formed inside the housing for disposing the light transmitting end 32 and the light detecting end 33.

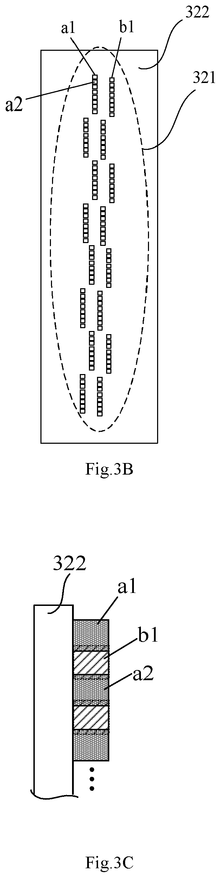

The light transmitting end 32 may include a light emitter array. As shown in FIG. 3B, a schematic diagram illustrating the arrangement structure of the light emitter array in an embodiment of this disclosure is shown in the front view.

The light emitter array may include N columns of light emitters that are staggered from each other, and each column of light emitters extends along a first direction to achieve scaning of the field of view in the first direction, where N>1. For example, the field of view in the first direction may be a vertical field of view. Optionally, the fields of view of adjacent light emitters in a column may not overlap with each other. Specifically, in a column of light emitters, each light emitter corresponds to a vertical field of view. Thus, the combination of the vertical field of views of various light emitters in a column corresponds to the vertical field of view of the column of light emitters( the field of view of the row of light emitters can be obtained in the same way), and the combination of the vertical field of views of each column of light emitters corresponds to the vertical field of view of the light detection device.

To clearly illustrate the staggered structure between columns of light emitters, reference may be made to FIG. 3B and FIG. 3C together. FIG. 3C is a schematic left partial structural diagram of FIG. 3B. The light emitter array 321 is provided on the circuit board 322 (PCB). The column of light emitters on the left and the adjacent column of light emitters on the right are not aligned in the column direction, forming the staggering. To be more specific, the first light emitter b1 in the column of light emitters on the right is slightly lower than a1, and is higher than the second light emitter a2 on the left. The absolute value of the vertical FOV angle corresponding to a1 is greater than the absolute value of the vertical FOV angle corresponding to the light emitter b 1, which is greater than the absolute value of the vertical FOV angle corresponding to a2. The so-called staggering means that the two columns of light emitters are staggered from each other in the first direction. It can also be understood that the FOV angle of each laser in the first direction (such as the vertical direction) is at least partially non-overlapping.

As can be seen in FIG. 3C, from the side view, b1 fills the gap between a1 and a2 in the column direction, which makes the distribution of light emitters in the column direction more dense, thereby improving the vertical resolution of the light detection device. Through the arrangement of the linear array of light emitters in FIG. 3B, for example, solid-state scanning in one dimension (1D solid-state) in the column direction (corresponding to the vertical field of view) can be achieved. Similarly, in other embodiments, adjacent rows of light emitter may also be staggered in the row direction, which are not described in details herein.

On the one hand, the arrangement of linear array of light emitter arrays shown in FIGs. 3B and 3C reduces the number of light emitters and reduces the cost compared to, for example, square arrays. On the other hand, the staggered structure between adjacent columns of light emitters in the linear array achieves a smaller size and higher resolution compared to a multiple columns of lasers aligned with each other.

In some embodiments, each light emitter may be a laser, such as a Vertical Cavity Surface Emitting Laser (or "VCSEL"), or an Edge Emitting Laser (or "EEL"). Correspondingly, the light detecting end 33 may include a light detector array, in which each light detector (also referred to as a detector or photodetector) may be, for example, an Avalanche Photo Diode (or "APD") or a Silicon Photo Multiplier (or "SiPM") and other implementations.

The light detection device 30 further includes an optical signal redirection component 34. The redirection means that the direction of the input optical signal can be changed/deflected through optical signal processing such as optical reflection, refraction, transmission, etc., and the transmission direction of the output optical signal can be re-determined. As shown in FIG. 3, the optical signal redirection component 34 is configured to deflect the transmission signal through movement so that the transmission signal is emitted from the window 31 of the light detection device 30 to achieve scanning of the field of view in the second direction, and to redirect the echo signal so that the echo signal is transmitted to the light detecting end 32. The mode of movement of the optical signal redirection component 34 may vary. If the optical signal redirection component is a rotating mirror, the movement here can be rotation, such as 300° clockwise rotation or 360° rotation, or it may be reciprocating motion, such as back and forth movement between -50°-+50°. Alternatively, if the optical signal redirecting member is a galvanometer, this motion can be swing.

The optical path for transmission signal and the optical path for received signal at least overlap between the window 31 and the optical signal redirection component 34. The overlap may refer to the coaxiality of the optical paths. That is, the two optical path segments have overlapping optical axes, as shown in J in the figure. It can be understood that both the transmission signal and the echo signal passes through the overlapping optical path segment in the light detection device 30. Such a coaxial optical path structure can avoid various problems caused by the paraxial optical path structure in the aforementioned example. Furthermore, under the reflection effect of the reflective surface 341, the optical path for transmission signal and the optical path for received signal also overlap in an optical path segment with the optical axis K.

The optical signal redirection component 3 can further realize the separation between the optical path for transmission signal and the optical path for received signal in other optical path segments. For example, a reflective surface 37 is provided in the optical path where the optical axis K is located, for deflecting the transmission signal from the light transmitting end 32 into the overlapping optical path segment.

Herein, by utilizing overlapping between the optical path for transmission signal and the optical path for received signal, do not adopt the structure of stacking the receiving and transmitting modules one above the other in the previous examples, which effectively reduces the height of the light detection device 30. According to the structure shown in FIG. 3A, in the transverse plane presented from the top perspective of the light detection device 30, the window 31, the light transmitting end 32, the light detecting end 33 and the optical signal redirecting member 34 are arranged in the transverse plane relatively on the left and right. At least one erected side of each of the window 31, the light transmitting end 32, the light detecting end 33 and the optical signal redirection component 34 is an optical surface, and the erected sides are correspondingly arranged to form a transversely extending optical path for transmission signals and the optical path for received signals, so as not to increase the overall height of the LiDAR.

In a specific example, the optical signal redirecting member 34 may include one or more optical surfaces for achieving light redirecting effects such as one or combinations of reflection, refraction, convergence, divergence, etc. The one or more optical surfaces may be located on a carrier component. As a further example, the carrier component may be rotating (such as a rotating mirror in a scanning LiDAR of rotating mirror type) or stationary (such as a reflector, a refractor, a lens, a lens group, etc.).

In a specific example, a first lens 35 may be provided in front of the light transmitting end 32 to collimate the transmission signal from the light transmitting end 32 before transmitting it. The first lens 35 may be, for example, a plano-convex lens with a convex surface facing the light transmitting end 32. A second lens 36 may be disposed in front of the light detecting end 33 for converging the passing echo signals toward the light detecting end 33. The second lens 36 may be, for example, a plano-convex lens with its plane facing the light detecting end 33. It should be noted that the light transmitting end 32, the first lens 35 (or lens group) and the reflector 37 can be packaged as an transmitting module, and the light detecting end 33 and the second lens 36 can be packaged as a receiving module, thereby improving convenience of assembly.

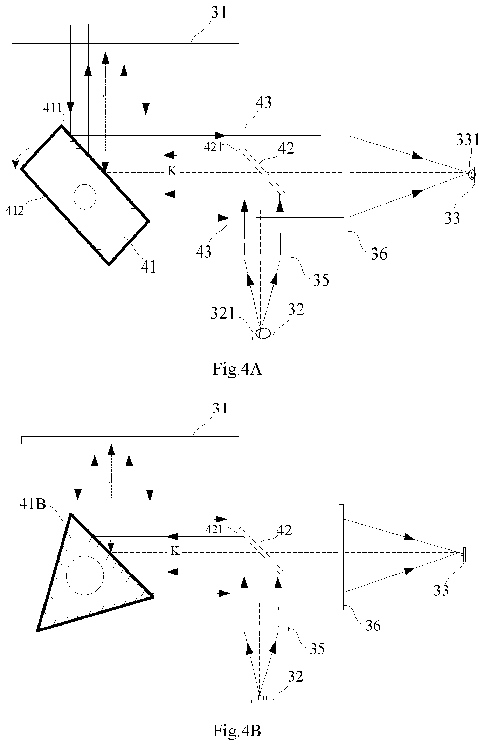

As shown in FIG. 4A, a schematic top perspective view of the structure of the light detection device in a specific embodiment of this disclosure is shown. In the example of FIG. 4A, the specific structure of the optical signal redirection component 34 in one embodiment is shown.

In the example of FIG. 4A, in addition to the window 31, the light transmitting end 32, the light detecting end 33, the first lens 35, and the second lens 36 shown in FIG. 3A, it is also shown that the optical signal redirection component 34 may specifically include a rotating member 41 and first redirecting member 42.

The rotating member 41 is controlled to rotate, and in the example of FIG. 4A, it is shown as a one-dimensional rotation in the transverse plane (schematically in the counterclockwise direction pointed by the arrow in the figure), so that the scanning in the horizontal field of view (relative to the vertical field of view) is achieved. It can be understood that the above example shows that the scanning in the vertical field of view is achieved by the light emitters arranged in the column direction, and the scanning in the horizontal field of view is achieved by the lateral one-dimensional rotation of the rotating member, it is not limited thereto. In other specific examples, the placement orientation of the light detection device can also be changed, for example, rotated 90 degrees compared to FIG. 4A, to achieve scanning in the vertical field of view, for example, through one-dimensional rotation of the rotating member, and by replacement of "column" by "row" of light emitters, scanning in the horizontal field of view is achieved.

For example, the rotating member 41 can be sleeved outside a rotating shaft of the motor so as to rotate with it when the motor drives the rotating shaft to rotate. The rotating member 41 includes at least one reflective surface used by the optical path for transmission signal and the optical path for received signal. When there is only one reflective surface, the optical path for transmission signal and the optical path for received signal may share this reflective surface. When there are multiple reflective surfaces, the optical path for transmission signal and the optical path for received signal may not share the same reflective surface of the rotating member 41. In the example of FIG. 4A, the rotating member 41 is exemplarily shown as a rectangular body, and its two opposite erected sides 411 and 412 may be reflective surfaces. When the rotating member 41 rotates to a preset position, such as the position shown in the figure, a reflective surface 411 deflects the transmission signal and makes it incident on the window 31, and then the transmission signal passes through the window 31 and is emitted to the environment outside of the light detection device for detection. If the transmission signal encounters an obstacle and forms an echo signal, the echo signal passes through the window 31, reach the reflective surface 411, and reach the detector 33 after being deflected by the reflective surface 411.

The first redirecting member 42 is located in the optical path for transmission signal and the optical path for received signal, is configured to output the transmission signal to the rotating member 41, and is formed with a passage portion for the echo signal to pass therethrough. In the example of FIG. 4A, the first redirecting member 42 may be implemented as a mirror, which may have a reflective surface 421. In the optical path for transmission signal, the reflective surface 421 is used to reflect the transmission signal from the light transmitting end 32 to the rotating member 41. When the rotating member 41 is located in the position shown in FIG. 4A, for example, its reflective surface 411 or 412 can receive the transmission signal, deflect the transmission signal to the window, and then emit it to the outside.

In the example of FIG. 4A, the passage portion is shown as gaps 43 located on both sides of the first redirecting member 42. The gaps 43 may be formed between the first redirecting member 42 and the inner wall of the housing of the light detection device or and other parts provided in the housing (such as brackets, etc.). In the structure of the example of FIG. 4A, in the optical path for received signal, the echo signal is reflected by a reflective surface 411 of the rotating member 41 and transmitted to the first redirecting member 42, passes through the gap 43 at the side of the first redirecting member 42 and is received by the light detecting end 33.

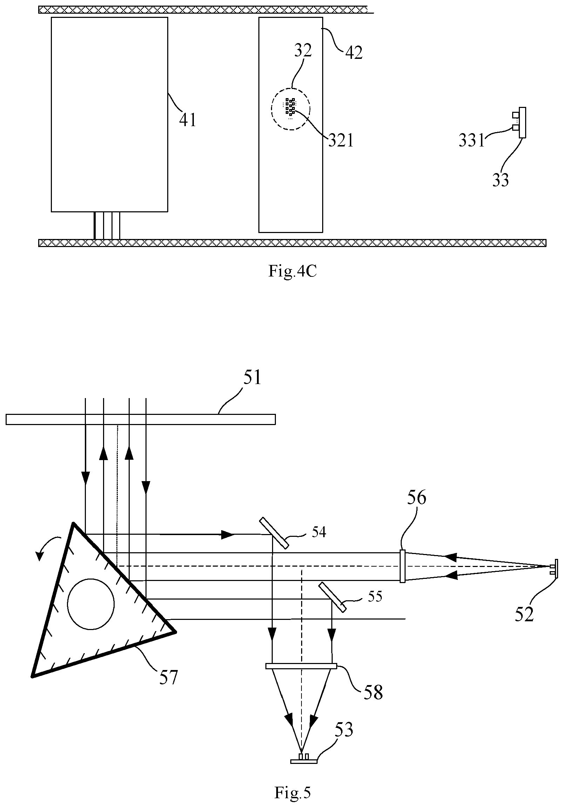

Referring to FIGs. 4A, 4B and 4C together, FIG. 4C shows a schematic side structural view of the light detection device in FIG. 4A or 4B. Specifically, FIG. 4C is a schematic structural diagram presented from the downward perspective of the window 31 in FIG. 4A. In FIG. 4A, the structure erected between the light transmitting end 32, the light detecting end 33, the rotating member 41 and the first redirecting member 42 can be seen more clearly. For easier understanding, the window 31, the first lens 35 and the second lens 36 are omitted in FIG. 4C, and part of the housing of the upper and lower boundary is exemplarily added as a reference. It is exemplarily shown that the light transmitting end 32 includes a light emitter array 321, and the light detecting end 33 includes a light detector array 331, for constructing various detection channels for transmitting and receiving optical signals.

The rotating member 41 can rotate continuously to transmit transmission signals and receive echo signals at different timings, or can rotate reciprocally to transmit transmission signals and receive echo signals at different timings. It can be understood that the rotation speed of the rotating member 41, the number of reflective surfaces, the switching speed of light emission of adj acent lasers affects the frame rate of point cloud detection of the LiDAR, and each factor needs to be coordinated to achieve the detection at the preset frame rate. When the detection frame rate is fixed, the larger the number of reflective surfaces, the lower the required rotation speed can be. It can be seen from this that the rotation speed of the rotating member 41 and the number of reflective surfaces can be set according to actual detection requirements. The number of reflective surfaces is also related to the structure of the rotating member 41 and can be at least two, such as 2, 3, 4 or more. In a specific example, the rotating member 41 may be a prism. The cross section of the rotating member 41 may be axially symmetrical or centrally symmetrical to achieve optical signal transmission and reception uniformly along the tiemline. For example, taking the rotating member 41 of a prism in FIG. 4A with a rectangular cross section as an example, its two opposite surfaces may be reflective surfaces. Alternatively, the rotating member 41 is a prism with a square cross-section, and all four sides thereof can be reflective surfaces. Alternatively, in FIG. 4B, the rotating member 41B shown is a prism with an equilateral triangle cross-section, and its three sides can all be reflective surfaces. During the rotation, the three reflective surfaces can be used successively in turn for the transmission of optical signals, and there is no side that is not used for optical signal transmission. It should be noted that in other examples, the rotating member 41 can also be implemented as a prism with a polygonal cross-section with more sides (such as a pentagonal prism, a hexagonal prism, etc.), and is not limited to the above examples.

It can be understood that the size, structure, and shape of the first redirecting member may affect the detection of the echo signal by the light detecting end. To this end, this disclosure provides various modified examples based on the structure in FIG. 4B mentioned above to help further improve the performance of the light detection device.

As shown in FIG. 5, a schematic top perspective view of the structure of the light detection device in the first modified example of this disclosure is shown.

In the example of FIG. 5, the main difference from the previous embodiment is that the positions of the light transmitting end 52 and the light detecting end 53 are interchanged, and the first redirecting member is changed into two spaced sub-redirecting members 54 and 55. There is a gap between the two sub-redirecting members 54 and 55 as a passage portion for transmission signals to pass therethrough to be reflected out of the window 51 by the rotating member 57. Optionally, the first lens 56 may be designed corresponding to the size of the gap. The surfaces on a side of the two sub-redirecting members 54 and 55 facing the rotating member 57 are reflective surfaces, used to reflect the echo signals incident on the window 51 and transmitted by the rotating member 57, and transmit the echo signals to the light detecting end 53 by the second lens 58. Optionally, the two sub-redirecting members 54 and 55 may be parallel. Further optionally, the two sub-redirecting members 54 and 55 may be located in the same plane and arranged with two sides aligned along a linear direction, as shown in FIG. 5. Alternatively, the two sub-redirecting elements 54 and 55 can be the edge portion of a mirror with a small aperture.

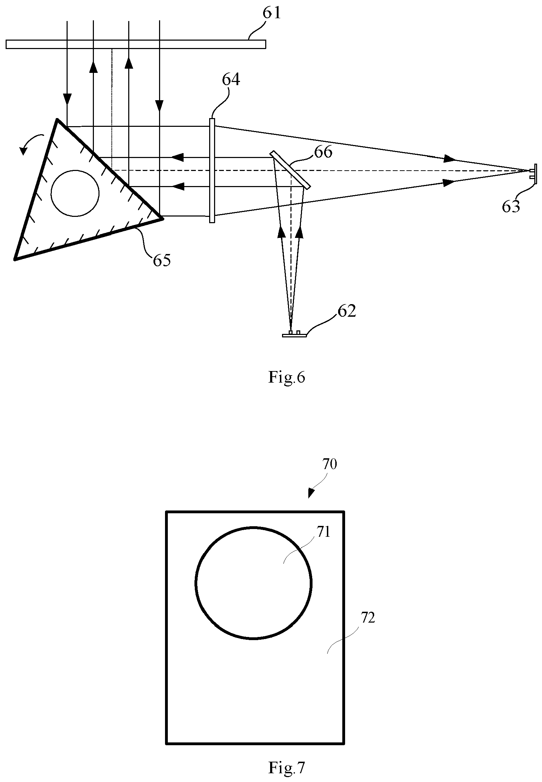

As shown in FIG. 6, a schematic top perspective view of the structure of the light detection device in the second modified example of this disclosure is shown.

In the example of FIG. 6, the main difference from the embodiment of FIG. 4B is that the light transmitting end 62 and the light detecting end 63 share a transceiver lens 64, and the transceiver lens 64 is disposed in an overlapping optical path segment between the rotating member 65 and the first redirecting member 66 in the optical path for transmission signals and the optical path for received signals. Optionally, the transceiver lens 64 may be, for example, a plano-convex lens, the convex surface of which is disposed toward the rotating member 65.

When the echo signal is incident through the window 61 and the echo signal is incident from the rotating member 65 to the transceiver lens 64, the transceiver lens 64 converges the echo signal and then transmits it to the light detecting end 63 through the gap, thereby improving the detection efficiency of echo signal. When the transmission signal from the light transmitting end 62 is reflected from the first redirecting member 66 to the transceiver lens 64 along the optical path for transmission signal, it is incident onto the transceiver lens 64 in a reverse direction and thus is reflected by the rotating member 65 and transmitted to the outside of the window 61. With this structure, the same transceiver lens 64 (or lens group) can be shared by transmission and reception, thereby reducing the number of lenses (or lens group).

In some embodiments, the circuit board at the light detecting end carrying the light emitter array can be flexible and can be bent into a curved surface. The formed notch is disposed corresponding to the first redirecting member, so that the light output axis of each light emitter in the light emitter array can is directed toward the first redirecting member.

It can be understood that since the optical path for transmission signal and the optical path for received signal may also form an overlapping portion between the rotating member and the first redirecting member, the echo signal and the transmission signal passes by the first redirecting member in different directions of the two optical paths respectively. Therefore, the first redirecting member may form a reflective surface to reflect one of the echo signal and the transmission signal, or may form a passage portion for the other of the echo signal and the transmission signal to pass through.

In each optical path structure, the size of the first redirecting member needs to be appropriately set by weighing multiple factors. For example, for the optical path structure shown in FIG. 4B, if the size of the first redirecting member 42 is too large, it may hinder the reception of many echo signals, thereby reducing the signal-to-noise ratio, whereas if it is too small, it affects the reflection of the transmission signal, because the emergent beam itself also has a certain divergence angle. Therefore, the relationship between the divergence angle of the transmission signal and the throughput of the echo signal in the passage portion (which affects the signal-to-noise ratio of the echo signal) can be considered, and weigh the relationship to achieve a preset optimization objective, deflecting as much the transmission signal as possible to the rotating mirror and then deflecting the transmission signal by the rotating mirror to the external obstacles. Furthermore, the echo signal reflected back by the obstacle can be blocked as little as possible, so that as much echo signal as possible can be received by the light detecting end, and then be used to calculate distance and reflectivity information to further generate point cloud diagram. Therefore, the size of the first redirecting member 42 is proportional to the divergence angle of the emergent beam at the first redirecting member 42. For example, for the optical path structure shown in FIG. 5, if the size of the first redirecting member (e.g., 54 and 55) is too small, it may not be enough to deflect the echo signal, thereby reducing the signal-to-noise ratio, and if it is too large, it affects the emission of the transmission signal, because the emergent beam itself also has a certain divergence angle. Therefore, in different optical path structures, consider the relationship between the output amount of the transmission signal and the throughput of the echo signal (affecting the signal-to-noise ratio of the echo signal), to achieve a preset optimized ratio. In this way, the objectives such as small overall size, long-range measurement and lower signal-to-noise ratios are achieved. In addition, the structural arrangement of the first redirecting member also have an impact on stray light. The possible modification of the first redirecting member are described below by way of examples.

In the above embodiment, the optical signal passes through the gap formed on the side or in the middle of the first redirecting member. However, the structure through which optical signal can pass is not limited to gaps, and can also be light-transmitting materials, such as glass. Based on this idea, in some embodiments of this disclosure, a first redirecting member composed of different parts that are transmissive and reflective may be provided.

As shown in FIG. 7, a schematic plan view of the first redirecting member in the third modified example of this disclosure is shown.

A side of the first redirecting member 70 shown in FIG. 7 corresponds to the reflective surface 421 in FIG. 4. In this example, the first redirecting member 70 includes a first area 71 for outputting the transmission signal to the rotating member, and a second area 72 outside the first area 71 for the echo signal to transmit through. For example, the first area 71 can be coated with reflective material, and the second area 72 can be made of light-transmitting material (such as glass, or the like). In this example, the second area 72 can surround the first area 71 and fixed to each other to form the first redirecting member 70. With this first redirecting member 70, it is more conducive to efficient transmission of echo signals and transmission signals, improving the detection performance of the optical detection device.

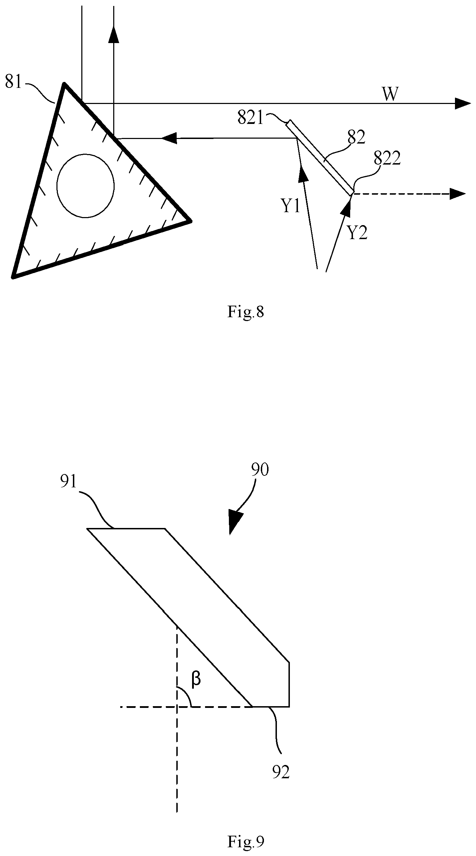

In addition, the structure of the end surface of the first redirecting member also affects the detection performance of the light detection device. As shown in FIG. 8, it is a partial structural schematic diagram of the first redirecting member and the rotating member in an embodiment of this disclosure. In this example, the cross-section of the first redirecting member 82 is rectangular, and convex corner of its one end 821 close to the rotating member 81 may hinder the transmission of the echo signal W to the light detecting end. In addition, the other end 822 of the first redirecting member 82 away from the rotating member 81 in FIG. 8 may have a reflection effect on the end surface that can be illuminated by the transmission signal. In the figure, the transmission signal Y1 is normally reflected by the first redirecting member 82 and transmitted along the first optical path, while the transmission signal Y2 is reflected by the end surface of the other end 822 of the first redirecting member 82 into the second optical path (as shown by the dotted arrow to the right in the figure). Once reflected into the second optical path, the transmission signal Y2 are emitted to the light detecting end along the second optical path to cause interference. The "close to" or "away from" refers to be close to or away from with respect to a fixed point on the rotating member 81, such as the center position of the rotating shaft of the rotating member 81.

As illustrated in FIG. 9, a schematic structural diagram of the first redirecting member according to the fourth modified example of this disclosure is shown.

The first redirecting member 90 in the example of FIG. 9 is improved on the basis of the example of FIG. 8.

In the embodiment of FIG. 9, optionally, the corner of the first redirecting member 90 described in FIG. 8 at one end close to the rotating member (i.e., the upper end in FIG. 8 ) is cut off to configure the end surface 91 of this end to be parallel to the axial direction of the optical path segment of the optical path for received signal between the rotating member and the first redirecting member.

In the embodiment of FIG. 9, optionally, at least part of the end surface of the end of the first redirecting member 90 away from the rotating member (i.e., the lower end in FIG. 9 ) is configured as a first reflective surface 92. A first preset included angle is formed between the first reflective surface 92 and the axis of the first optical path segment in the optical path for transmission signal that leads to the first redirecting member 90, such as the included angle β as shown in the figure, which can be a right angle or an obtuse angle. This prevents the incident optical signal from entering the optical path for received signal after being reflected, that is, it deviates from the optical path for received signal and thus do not cause interference to the light detecting end.

In addition, for the first redirecting member with a transparent portion, it is possible that the transmission signal is transmitted therethrough and further reflected to cause interference.

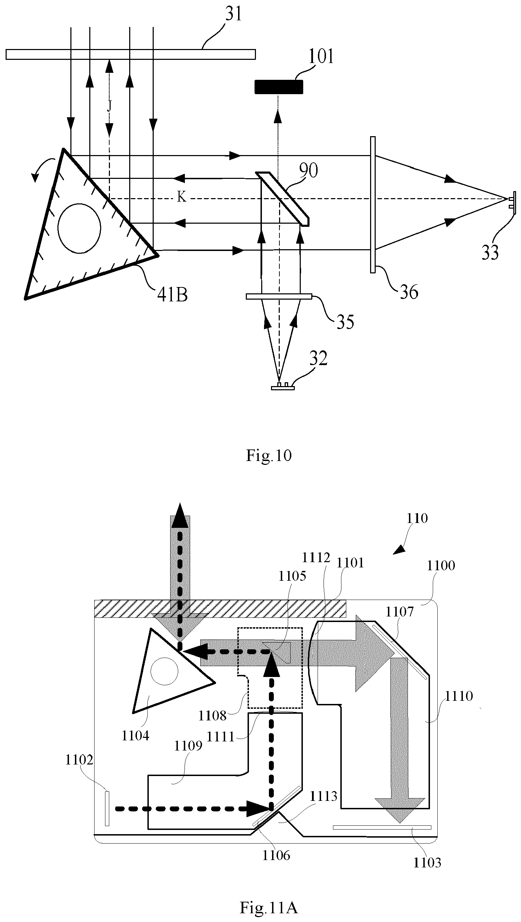

As shown in FIG. 10, a schematic structural diagram of a light detection device in an embodiment of this disclosure is shown, which is an example based on the combination of the embodiments in FIG. 4B and FIG. 9. In order to reduce the interference caused by the transmission-through of the transmission signal, the light detection device in this example further includes a light shielding member 101 disposed on the propagation path of the transmission signal that transmits through the first redirecting member 90. In some examples, the light shielding member 101 may also be integrated with the first redirecting member 90, such as a light-absorbing material coated on the surface of the first redirecting member 90.

As shown in FIG. 11A, a schematic top perspective view of the structure of of a light detection device according to another specific embodiment of this disclosure is shown.

In this example, a bottom plate 1100 of the housing of the light detection device 110 is shown, as well as components located on the bottom plate 1100 such as a window 1101, a light transmitting end 1102, a light detecting end 1103, a rotating member 1104, a first redirecting member 1105, a second redirecting member 1106, a third redirecting member 1107, a first sheath 1108, a second sheath 1109, a third sheath 1110, a first lens 1111, a second lens 1112, etc. The black dotted line represents the direction of the energent beam: it is emitted from the emitter (array) 1102, is deflected by the reflector 1106, is deflected by the first redirecting member 1105, then is incident onto the rotating mirror 1104, and is deflected and then exits to the outside.

The thick arrow with a gray background represents the incident path of the echo reflected from the obstacle in the field of view directly in front of the product: it is first incident onto the rotating mirror 1104, is deflected, passes by the peripheral side of the first redirecting member 1105, then transmits through the lens (group) 1112 and is deflected by the reflector 1107, and is finally incident onto the detector (array) 1103.

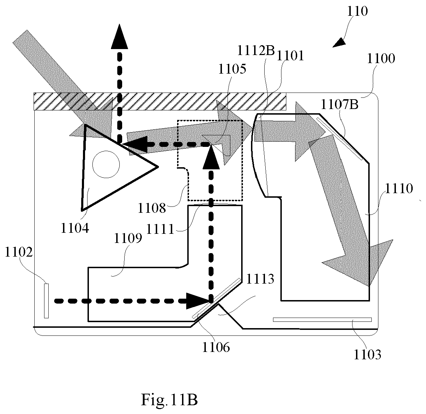

Because there may be relatively strong incident light (especially in the event of encountering an obstacle with high reflectivity) at the margin of the window (such as the left margin of the window 1101 in FIG. 4A and FIG. 11A, or refered to as the leftmost viewing angle of the detection FOV of the light detection device), it causes strong light interference to the light detecting end if entering the optical path for received signal. Therefore, in some examples, as shown in FIG. 11B, the erecting direction of the second lens 1112B may not be the vertical direction along the transverse plane (i.e., the height direction), but may have a deviation angle from the vertical direction (tilting downward), such as a value between 3 ° and 6° or between 6° and 9° , so that the stray light incident at the marginal FOV angle can be deflected to a position deviated from the light detector array on the light detecting end 1103, such as incident onto the side wall of 1110 as shown by the shaded arrow in the figure, after passing by the tilted lens 1112B and a reflector 1107B, which can improve the stray FOV situation.

Optionally, at least one second redirecting member 1106, such as a reflector, may be disposed in the optical path for transmission signal to form a folded optical path for transmission signal. Correspondingly, the position of the light transmitting end 1102 can be adjusted, for example, located on the left side wall in FIGs. 11A and 11B, and its emitted signal is reflected toward the first redirecting member 1105 by the second redirecting member 1106. Similarly, optionally, at least one third redirecting member 1107, such as a reflector, can be disposed in the optical path for received signal to form a bent optical path for received signal, so that the position of the light detecting end 1103 can also be changed, for example, located near the back wall of the light detection device in the figure. The positions of the light transmitting end 1102 and the light detecting end 1103 are variable and can be set at required positions to meet the spatial layout requirements within the light detecting device, and the light transmitting end 1102 and the light detecting end 1103 can be set far apart from each other to reduce possible crosstalks.

In FIG. 11A, the optical path for transmission signal is shown by the dotted arrow, and the optical path for received signal is shown by the shaded arrow.

For example, the first redirecting member 1105 may be packaged in a first sheath 1108 that extends toward the light transmitting end 1102 along the optical path for transmission signal. The first sheath 1108 may be provided with a light-transmitting portion (opening, or a window provided with a light-transmitting member, etc.) on one side corresponding to the second lens 1112. Within the coverage of the first sheath 1108, the transmission signal and the echo signal can be effectively isolated, thereby reducing the crosstalk between the transmission signal and the echo signal. Optionally, the first sheath 1108 may be implemented as a sleeve, and the sleeve may be made of hard material.

In order to reduce the interference of the echo signal to the optical path segment between the light transmitting end 1102 and the first redirecting member 1105, a second sheath 1109 can also be provided in this optical path segment. The light transmitting end 1102 corresponds to an end of the second sheath 1109. The second sheath 1109 extends toward the first redirecting member 1105 along the optical path for transmission signal, and forms a light output port at the other end. Optionally, the first lens 1111 may be disposed at the light output port of the second sheath 1109. Optionally, the second sheath 1109 may be implemented as a sleeve, and the sleeve may be made of hard material.

Further optionally, when the first sheath 1108 is present, one end of the light output port of the second sheath 1109 can be adjoined to the extended end of the first sheath 1108 to reduce crosstalk as much as possible. It should be noted that the adjoining may be seamless or implemented with a gap left.

In the same way, optionally, a third sheath 1110 can also be configured corresponding to the optical path for received signal. The light detecting end 1103 may correspond to one end of the third sheath 1110. The third sheath 1110 extends toward the first redirecting member 1105 along the optical path for received signal, and forms a light input port at the other end for receiving the echo signal. Optionally, the third sheath 1110 may be implemented as a sleeve, and the sleeve may be made of hard material.

As an example, the first sheath 1108, the second sheath 1109 and the third sheath 1110 can be fixed to the housing of the light detection device or can be fixed to a bracket mounted onto the housing by, for example, screw locking, adhereing or snapping.

It should be noted that although the first sheath 1108, the second sheath 1109 and the third sheath 1110 are shown in the embodiment, in actual examples, any one or more of them can be selected for use separately or in combination without being limited by the above embodiment.

In addition, optionally, a blocking portion 1113 can be provided between the optical path for transmission signal and the optical path for received signal to reduce mutual crosstalk. The blocking portion 1113 may be, for example, a curved portion, and the surface of the curved portion may be, for example, a sharp convex surface as shown in the figure, or may be a curved surface or a flat surface, the structure of which is not limited. The curved portion can block the direct transmission path between the light transmitting end and the light detecting end, thereby reducing crosstalk. In some optional examples, the surface of the second sheath 1110 may also be provided with a concave portion that is complementary to the curved portion, thereby further increasing the blocking effect on incoming optical signals.

As in the previous embodiment, multiple detection channels are formed between the light emitter array and the light detector array. During one round of transmission and reception of an optical signal, multiple light emitters in the light emitter array are activated to emit light, and multiple light detectors in the light detector array are activated for detection, and they constitute multiple detection channels. In this process, crosstalk may occur between detection channels operating synchronously.

To reduce crosstalk between detection channels, in some embodiments, each row or column of light emitters can be divided into multiple banks of light emitters, and each bank of light emitters can correspond to one detection channel. During one signal transmission process, when the light emitter array is operating, light emitters are selected from various banks of light emitters to emit light. This can increase the isolation space between the light emitters of different detection channels that are activated in the same signal transmission process, that is, increase the space occupied by the unactivated light emitters between the two activated light emitters, thereby reducing crosstalk. In the same way, the light detector array can also be divided into banks of light detectors. In one signal transmission process, light detectors are respectively selected from various banks of light detectors corresponding to different detection channels to activate, and an isolation space between light detectors activated to work in different detection channels can also be formed in the same signal transmission process, thus reducing crosstalk.

Optionally, the above-mentioned grouping of the light emitter arrays and respectively selecting the light emitters to be activated in a signal transmission process, and the grouping of the light detector arrays and respectively selecting the light detectors to be activated in a signal transmission process can be implemented alternatively or together. When implemented together, crosstalk between multiple detection channels (especially adjacent detection channels) operating together during a signal transmission process can be reduced more effectively.

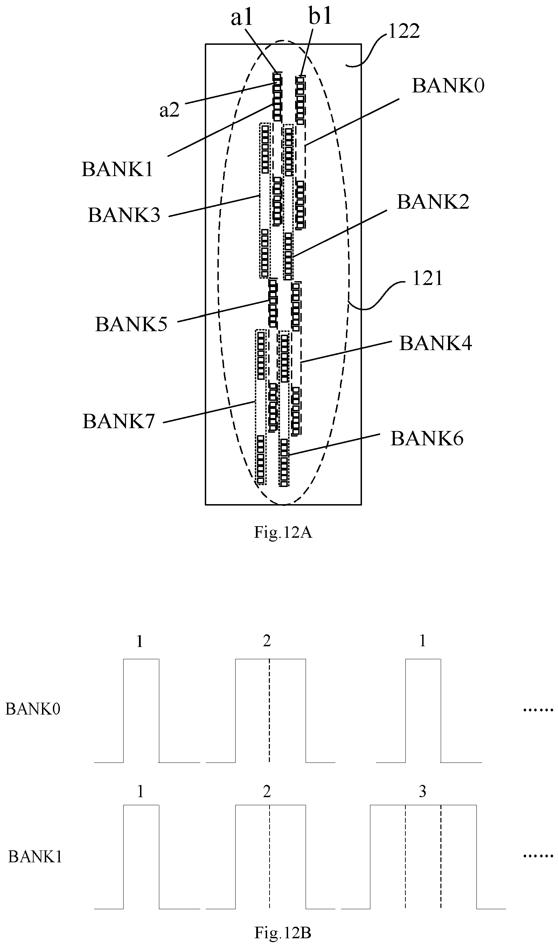

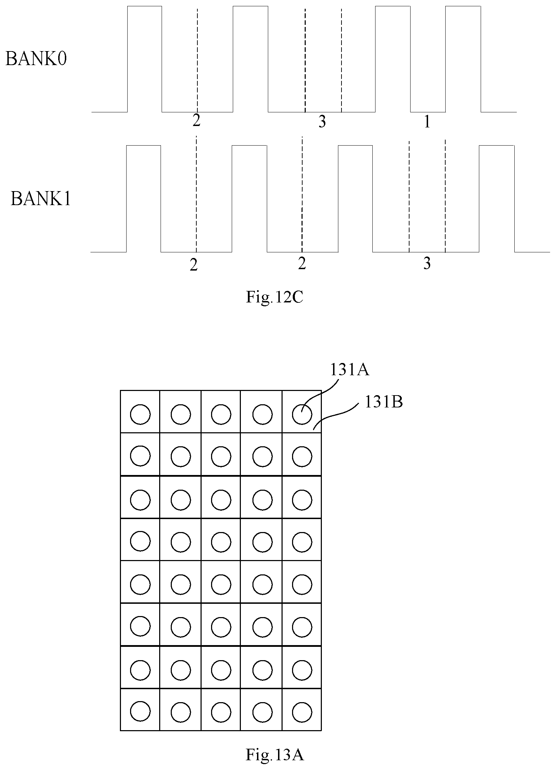

To simplify the description, only the division of the light emitter array into banks of light emitters is illustrated below as an example. As shown in FIG. 12A, a schematic structural diagram illustrating the division of banks of light emitters according to the example structure of FIG. 3B is shown. In this example, every eight light emitters continuously arranged in the column direction are a unit, and the two units in a column, that is, 16 light emitters, are a bank of light emitters, forming a total of eight banks of light emitters, namely Bank0-Bank7. During one round of transmission and reception of an optical signal, a light emitter in each bank may be selected to activate. Then, there are eight light emitters to emit light during one signal transmission process, which is represented by diagonal shading in the figure.

It can be seen that by grouping the light emitters and selecting the light emitters to emit light respectively, the more light emitters each bank of light emitters contains, the greater the isolation space between the activated light emitters.

It should be noted that the manner for dividing the banks of light emitters in FIG. 12A is only an example and is not unique. For example, one unit of eight light emitters continuously arranged in the column direction in the figure may be taken as a bank, or three units or more than three units in a column may be a bank, or an indefinite number of light emitters discretely arranged in different rows or different positions, for example, may be a bank, which is not limited herein.

For example, adjacent rows of light emitter or banks of light emitter of light emitter columns may also be arranged in a staggering manner in the extension direction. For example, in the figure, when one unit is taken as one bank, it can be seen that adjacent columns of banks are arranged in a staggering manner in the column direction. This example is similar to the previous staggering arrangement of light emitters in adjacent columns or rows of light emitter for the purpose of increasing resolution.

In some examples, each light emitter in each bank of light emitters and/or each light detector in each bank of light detectors has a different signal transmission process when activated. For example, during one signal transmission process, a1 in Bank0 is activated, b1 in Bank1 is activated, and a light emitter in other banks is each selected to activate. During the next signal transmission process, a2 in Bank0 is activated, b3 in Bank1 is activated, and so on, and another light emitter in other banks is each selected to activate. By analogy, the light emitters are activated again in turn until all the light emitters in each bank are activated.

Similarly, respctive light detectors in each bank of light detectors can also be activated in turn during different signal transmission process. For example, the light detectors i2 in the bank of light detectors Bank9 constitutes a detection channel with a1, and the light detectors i1 constitutes a detection channel witch a2; the light detectors j 1 in Bank10 constitutes a detection channel with b1, and the light detectors j2 constitute a detection channel with b2. When a1 and b1 are activated during a signal transmission process, i2 and j 1 are also activated, and so on.

As shown in FIG. 12A, there are eight banks, and each bank has 16 light emitters, a total of 128 light emitters. If a light emitter and a light detector constitute a detection channel, there are a total of 128 detection channels, which is "128 beams". During each signal transmission process, eight of the 128 detection channels work together, and all detection channels are traversed after 16 signal transmission processes. Each light emitter can employ, for example, a VCSEL laser, achieving extremely high vertical resolution of around 0.2°.

In specific application scenarios, the light detection device can be implemented as a LiDAR applied on a traveling vehicle (such as a vehicle). In the field of LiDAR, one detection result (such as a point cloud image) is generally obtained from each frame of detection. This point cloud image covers the entire horizontal and vertical field of view.

In a road driving scenario, for example, obstacles may be people or vehicles on the road, and these are very important for autonomous driving. Among the various detection channels of the LiDAR, the field of view of the middle detection channel covers more people or vehicles on the road; the closer the detection channel is to the margin, the farther away it is from the obstacles on the road. It can be understood that the light emitters in the middle region of the light emitter array belong to the middle detection channel, and the light emitters in the margin region of the light emitter array belong to the marginal detection channels.

To improve the effect of detecting obstacles at a short range, in addition to long-range measurement (for example, 150m), the LiDAR can emit additional light for short-range measurement (for example, 3m) during a detection (such as detection corresponding to a horizontal FOV angle), and the long-range measurement and short-range measurement results are combined together to obtain the detection result. In a specific example, the short-range measurement and long-range measurement actions can be implemented through different ToF windows respectively. The ToF window refers to a range of time of flight, and it is calculated as τ=2×d/c, where τ is the time of flight from when the light emitter sends out the transmission signal to when the echo signal is received, d is the distance to the obstacle, c is the speed of light, and 2 times d represents the round-trip distance of the transmission signal and the echo signal. For example, when detecting an object at a distance of 150 meters, it is limited to only receiving echo signals obtained within the possible preset range of time of flight corresponding to a distance of 150 meters. Echo signals beyond this preset range of time of flight are excluded.

In possible examples, the distance corresponding to the long-range measurement action may be 100 meters to 150 meters, or 150 meters to 200 meters, or 200 meters to 250 meters; the distance corresponding to the short-range measurement action may be 3 meters to 5 meters, 5 meters to 10 meters, etc.

In possible examples, partially or wholly repeated detection channels may be used between the short-range measurement action and the long-range measurement action. For example, the light emitters in the middle area of the light emitter array in the first direction are used for long-range measurement of 250 meters and short-range measurement of 3 meters. In the case of long-range measurement as the primary and short-range measurement as the supplement, the frequency of actions in each detection and the resource allocation of the detection channel can be tilted towards the long-range measurement action. For example, a short-range measurement action is performed after every 4 long-range measurement actions, or the like.

In possible examples, for short-range measurements, a smaller number of light emitters are used, and the corresponding number of detection channels is also reduced accordingly. For example, only the channels near the middle area among the eight banks are selected for short-range measurement. For example, part of the light emitters, the number of which is smaller than 128, such as 40 light emitters, may be selected, and if each light emitter corresponds to a detection channel, there can be 40 detection channels, and 40 detection channels are polled in sequence to perform short-range measurement action. Optionally, there is also a difference in the polling method of the channel between the short-range measurement action and the long-range measurement action. For example, during a signal transmission process for each long-range measurement action, multiple banks in the middle area (such as BANK2, BANK3, BANK4, and BANK5 in FIG. 12A) select light emitters of one channel to operate together. During the signal transmission process of the short-range measurement action, among the multiple banks in the middle area, only one channel in one bank is selected to operate.

In possible examples, the long-range measurement action corresponds to multiple detection distances, such as 150 meters and 250 meters. If the position of the activated light emitter in the light emitter array is closer to the center, the corresponding expected detection distance is further. That is, the expected detection time window is wider. For example, in FIG. 3B, the light emitter closer to the middle of the middle area in the vertical direction provides a ranging window of 250 meters (window τ = 2 × d/c), and is expected to detect up to 250m; the light emitter at the relative margin provides a ranging window of 150 meters and is expected to detect up to 150m.

The above-mentioned activation methods of light emitters are only some examples and do not limit their possibilities of implementation. For example, in other examples, multiple light emitters can be configured to correspond to a vertical field of view (such as in the same row), but these multiple light transmitting units do not emit light simultaneously (such as emitting light in turn), which can increase their respective lifespans and reliability.

In some embodiments, by configuring the light emitter array and the driving mode of the corresponding driving circuit, each light emitter can be controlled individually. Thus, each light emitter can be polled to emit light, or all light emitters can emit light together or in any other combination. For example, each light emitter in the light emitter array can be polled in any order, interval, signal characteristics (such as one or more combinations of wavelength, pulse width, pulse number, pulse peak and inter-pulse time interval) and/or the like to achieve flexible electronic scanning (e-scanning).

In some examples, in order to reduce crosstalk between detection channels, signal characteristics between optical signals transmitted in various detection channels operating in the same signal transmission process are different. Among them, the optical signal transmitted in each detection channel includes the transmission signal and the corresponding echo signal. The light detection device may also include a control module, which may be configured to determine the detection channel to which the signal belongs based on signal characteristics.

Specifically, the light detector at the light detecting end converts the received optical signal into an electrical signal, and can pass it to the control module after certain signal processing (such as filtering, analog-to-digital conversion, etc.). The control module can determine whether the signal characteristics of the echo signal match the signal characteristics of the transmission signal of the light emitter of the corresponding detection channel, and when matching, the echo signal is used for the corresponding detection channel to calculate the detection results, such as calculating the distance from the object, etc. In specific examples, the control module may be implemented by, for example, a microcontroller unit (MCU), a programmable gate array (FPGA), or a system on a chip (SoC).

In some examples, each light emitter is activated by a drive signal from a drive circuit, which may be generated by the drive circuit of the light emitter. Optionally, the driving signal may include one or more electrical pulse signals (e.g., periodic pulse signals), and then the transmission signal of the light emitter may also include one or more optical pulse signals. In corresponding examples, the dimensions of the signal characteristics may include any one of or any combination of wavelength, pulse width, pulse number, pulse peak, and inter-pulse time interval.

The principles of signal characteristics in various dimensions are explained in various examples.

In the example in which wavelength is used as the signal characteristic, the wavelengths of the signals emitted by each bank of light emitters are not exactly the same. Furthermore, the optical wavelengths of the signals emitted by the light emitters operating in the same signal transmission process are different. As an example, BANK0, BANK1, BANK2, and BANK3 each have one light emitter to emit signals in the same round. BANK0 is configured to include multiple light emitters that emit optical signals with wavelength of λ0, and the corresponding BANK1 to BANK3 are configured to include light emitters that emit optical signals with wavelengths of λ1 to λ3, where λ0≠λ1≠λ2≠λ3. Therefore, in each round, one light emitter is respectively selected from the four banks to emit optical signals, and the wavelengths of the signals emitted by the four light emitters that transmit signals together in any round are different.

Further, in the light detector array, a bank of light detectors corresponding to the bank of light emitters is provided, and a filtering unit can be provided upstream the optical path of each light detector in each bank of light detectors. Each filtering unit can be configured to allow only the echo signal of the wavelength corresponding to this detection channel to pass, thereby filtering out the echo signals of other detection channels and ambient light interference.

As another example, it is assumed that the light emitter array is divided into n banks of light emitters. Each bank of light emitters emits signals with different light wavelengths, which are λ1 to λn respectively. Thus, in a light emitter array, it is suitable to emit at most n transmission signals together. When a light emitter is selected for activation from any number of banks of light emitters among the n banks of light emitters, the multiple light emitters emitting together can emit signal beams of different wavelengths. When n banks of light emitters are selected for activation together, one light emitter is selected from each bank of light emitters to transmit a signal for detection during one transmission and reception of an optical signal. The beam of the transmission signal is emitted through the transmitting lens, and an echo signal is formed after it is reflected by an object. The wavelength of each echo signal is the same as the corresponding incident transmission signal, which is also λ1 to λn. The n echo signals return to the light detection device through the window and are sent to the light detector array through the receiving lens. In the light detector array, n banks of light detectors can be provided corresponding to n banks of light emitters, and a filter unit can be provided in front of each light detector in each bank of light detectors. Each of the filtering units can be configured to allow only the echo signal of the wavelength corresponding to this detection channel to pass, and in one transmission of an optical signal, one light detector is selected from a bank of light detectors to be activated, so that n echo signals can be detected by n light detectors respectively without detecting echo signals of other wavelengths, thus reducing interference.

In the example in which pulse width is used as a signal characteristic, each transmission signal can contain multiple pulses, and the ratio of their pulse width can be configured to be different, such as 2:3:1:...., as the signal characteristic of this transmission signal (can be encoded to obtain signal characteristic encoding). During the same signal transmission process, the ratios of pulse width of the transmission signals of different detection channels operating together are different. As an example, this can be achieved by using different ratios of pulse width for different banks. For example, as shown in FIG. 5B, the multiple consecutive pulses contained in the transmission signal of each light emitter in BANK0 use the ratio of pulse width of 1:2: 1:..., the multiple pulses contained in the transmission signal of each light emitter in BANK1 use the ratio of pulse width of 1:2:3:..., and the ratios of pulse width of other banks are also different. During the same signal transmission process, the ratios of pulse width of the transmission signals from the light emitters selected from different banks are different from each other, so that the ratios of pulse width of the echo signals generated by them respectively are also different. By determining whether the ratio of pulse width of the echo signal is the same as the ratio of pulse width of the transmission signal of this detection channel, it can be determined whether the echo signal belongs to this detection channel. When the ratio of pulse width of the echo signal is different from the ratio of pulse width of the transmission signal of this detection channel, it is filtered out as an interference signal. Therefore, different pulse width are used as signal characteristics to distinguish the echo signal correspondence of different detection channels.

In the example in which the inter-pulse time interval is used as a signal characteristic, during the same signal transmission process, the transmission signals of different detection channels operating together have different ratios of the inter-pulse time interval. As an example, this can be achieved by setting different ratios of inter-pulse time intervals of transmission signals from different bank. For example, as shown in FIG. 5C, the ratio of pulse time interval of multiple consecutive pulses contained in the transmission signal of the light emitters in BANK0 is 2:3:1:..., and the ratio of pulse time interval of multiple consecutive pulses contained in the transmission signal of the light emitters in BANK1 is 2:2:3.... Therefore, the ratio of pulse time interval of the respective echo signals generated is also different. The correspondence of echo signals of different detection channels can be distinguished by determining whether the ratio of inter-pulse time interval of the echo signal is consistent with the ratio of inter-pulse time interval of the transmission signal of this detection channel.

In the example in which the number of pulses is used as a signal characteristic, during the same signal transmission process, the transmission signals of different detection channels operating together contain different numbers of pulses. As an example, the transmission signals of light emitters of different banks contain different numbers of pulses, and thus the number of pulses of the respective echo signals generated is also different. The correspondence of echo signals of different detection channels can be distinguished by determining whether the number of pulses of the echo signal is the same as the number of pulses of the transmission signal of this detection channel.

In the example in which the pulse peak (corresponding to the peak of the light intensity or the peak converted into an electrical signal) is used as the signal characteristic, during the same signal transmission process, the ratios of peak intensity of multiple pulses contained in the transmission signals of different detection channels operating together are different. As an example, this is achieved by setting different ratios of pulse peak intensity of multiple pulses included in the transmission signals of light emitters of different banks. For example, the ratio of pulse peak of multiple pulses included in the transmission signal of the light emitters in BANK0 is X:Y:Z:..., and the ratio of pulse peak of one or more pulses included in the transmission signal of the light emitters in BANK1 are W:X:Y.... Therefore, the ratios of pulse peak of the respective echo signals generated are also different. The correspondence of echo signals of different detection channels can be distinguished by determining whether the ratio of pulse peak intensity of the echo signal is consistent with the ratio of pulse peak intensity of the transmission signal of this detection channel.

In addition, the above signal characteristics can also be combined to generate signal characteristics of optical signals of different detection channels.

It should be noted that the above ratios, such as ratio of pulse width, ratio of inter-pulse time interval, ratio of pulse peak intensity, and integer ratios are only given for illustration. In practical disclosures, the above ratios can be any values.

It can be understood that in one or more of the various embodiments in which the respective detection channels are distinguished by signal characteristics, the light detection device may be a LiDAR, and any one or any combination of lasers (the lasers can be addressed) may be polled and freely selected to achieve detection and scanning with high degree of freedom, thereby achieving at least objects in multiple aspects.

On the one hand, free selection of detection objects and areas can be achieved. Specifically, when the light detection device is a LiDAR, it can be mounted on, for example, a traveling vehicle (such as an intelligent driving car, etc.) and then perform detection. If a specific object or area of interest is identified based on the point cloud data of a certain scanning, it is possible to activate/scan only this specific object or area of interest via free addressing when it is necessary to perform scanning again next time, which is applicable in implementations such as scanning of specific objects or areas of interest with higher density.

On the other hand, crosstalk of detection channel may be reduced. Since the specific area to be irradiated or to be scanned may be freely selected, lasers with as large a physical distance as possible can be selected to emit light in the same signal transmission process during detection as shown in the embodiment shown in FIG. 12A, which significantly reduces crosstalk between detection channels. Compared with the current LiDAR products, better signal-to-noise ratio and detection effect can be achieved.

Furthermore, the number of detections required to collect point cloud data can be reduced, thereby reducing the overall power consumption of the light detection device. Under the technical trend of increasing number of beams, the larger the number of beams, the more energy is consumed, which causes additional problems in terms of heat dissipation and reliability.

In some embodiments, the light emitter may be a Vertical Cavity Surface Emitting Laser (VCSEL), which has the advantage of a spatially symmetric distribution of divergence angles. In view of the problem that VCSEL has a large scattering angle, a single large-aperture lens is generally used to collimate the entire VCSEL, which may increase the equivalent light-emitting surface and reduce the power density. In view of this, a separate or directly imprinted micro-lens array (or "MLA") can be added to the light-emitting surface of the VCSEL.

The Vertical Cavity Surface Emitting Laser (or "VCSEL") includes a plurality of light-transmitting units (such as light emitting points), and each micro-lens unit in the micro-lens array is arranged in a one-to-one correspondence with the light-transmitting unit and has a shape matching with the light-transmitting unit. In order to avoid the leakage of light that cannot be collimated due to the gap between the micro-lens units, which affects the power density of the Vertical Cavity Surface Emitting Laser, in an optional example, the plurality of light-transmitting units are arranged in a polygon, and the micro-lens units each have a corresponding polygonal shape and are assembled with each other. The polygon may be a shape with three sides or more sides, such as a triangle, a parallelogram, a rectangle, a square, a regular pentagon or other pentagons, a regular hexagon or other hexagons, or other polygon with more sides.

As shown in FIG. 13A, a schematic structural diagram of a micro-lens array according to an embodiment of this disclosure is shown. In this example, the respective light-transmitting units 131A are arranged in a rectangular shape, the corresponding micro-lens units 132A are square, and the respective micro-lens units 132A are assembled side by side to form a micro-lens array with substantially no gaps.

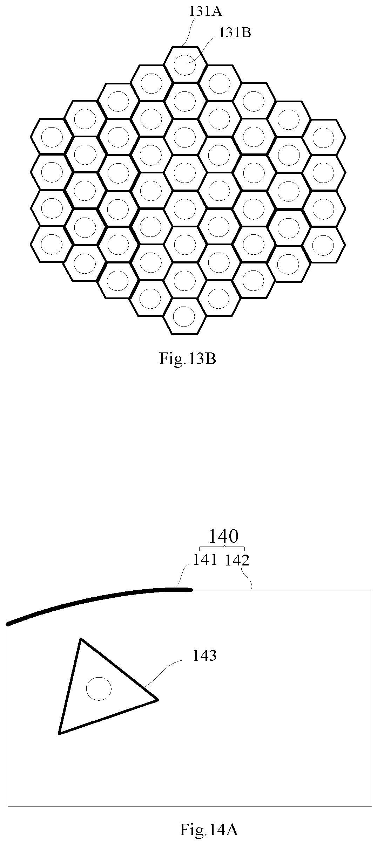

As shown in FIG. 13B, a schematic structural diagram of a micro-lens array according to another embodiment of this disclosure is shown. In this example, the respective light-transmitting units 131B are arranged in a regular hexagon, and the corresponding micro-lens units 132B are arranged in a corresponding regular hexagon. The respective micro-lens units 132B are assembled side by side to form a micro-lens array with substantially no gaps, appearing in the honeycomb shape as shown. In an optional example, the size of the regular hexagonal micro-lens unit is set so that the diameter of its inscribed circle is equal to the distance between the centers of adjacent light-transmitting units to achieve a dense distribution.

In addition, in an optional example, the type of surface of the microlens can be designed as a plano-convex (that is, one side is convex and the other side is flat) shape according to the collimation requirements, and its convex side can be spherical or aspherical. In an optional example, the flat side and/or the convex side of the MLA can also be coated with an anti-reflection membrane of VCSEL wavelength to improve the transmittance.

In some examples, the micro-lens array can be imprinted on the light-emitting surface of the light emitter by a semiconductor process. When the light emitter is a Back-Side Illumination (or "BSI") VSCEL, the process difficulty of imprinting the micro-lens array are reduced. Specifically, the light emitting direction of each light-transmitting unit in VSCEL is a direction from an active area to a substrate. That is, the light is emitted from one side of the substrate. Each microlens can be directly formed on the surface of the substrate to form a micro-lens array. Compared with installing separate micro-lens arrays that accurately correspond to each light-transmitting unit, the process difficulty is greatly reduced.

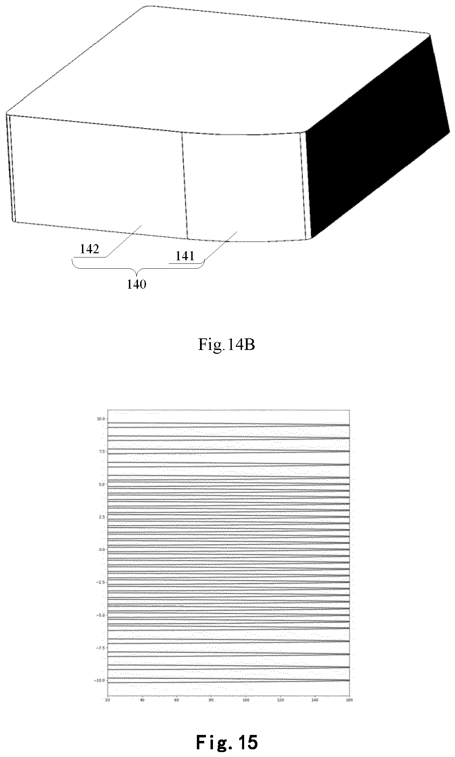

In some examples, the shape of the window can also be set to a shape that is more conducive to collecting echo signals. As shown in FIG. 14A and FIG. 14B, a top perspective structural diagram illustrating the window structure of the light detection device in one embodiment of this disclosure is shown. The window 140 is configured in the shape of a curved surface, and specifically may include a first part 141 and a second part 142 of the curved surface. The first part 141 is an area where the transmission signal and the echo signal pass, and the second part 142 is an area where the transmission signal and the echo signal do not pass. The second portion 142 may be of any shape. In this way, on the one hand, the FOV of the optical detection device is increased, and on the other hand, a certain convergence effect on the received echo signals is generated, which also improves the quality of the echo signals and improves the detection performance. The rotating member 143 shown in FIG. 14 is only provided to illustrate the current placement posture of the light detection device.

In the light detection device in the embodiments of FIG. 2A, FIG. 3A, FIG. 4A, FIG. 4B, FIG. 5 and the like, the rotating member is disposed on the relatively left side of the interior transversely, that is, close to the left side of the window. The echo signal incident from the right viewing angle of the window may suffer greater losses during transmission to the light detecting end than the echo signal incident from the left viewing angle. Therefore, compensation and calculation may be performed on the echo signal of the detection channel corresponding to the right viewing angle. Specifically, the compensation calculation can be completed by a control module (such as FPGA, SoC, etc.) in the light detection device.

Embodiments of this disclosure may further provide a traveling vehicle, which includes the light detection device in the foregoing embodiments. In specific examples, the driving vehicle can be implemented as a car, such as an electric or gasoline-driving car, and can be a non-autonomous driving, semi-autonomous driving (assisted), or driverless car. The light detection device can be implemented as a mechanical LiDAR, specifically, a forward-facing LiDAR, which is installed on the vehicle at a posture shown in the previous embodiments (such as FIG. 2A, FIG. 3A, FIG. 4A, FIG. 4B, and FIG. 5) with window facing forward for detection operations.

In an optional example, the light detection device may be disposed at the front of the vehicle, that is, for example, at the head of the vehicle. The light detection device can be installed in a concealing cofiguration, for example, installed in the car light, next to the car light, in the car logo, or in the bumper by embedding in the shell of the car. Since the light detection device no longer needs to use a structure in which receiving and transmitting modules are stacked one top of each other, the height can be greatly reduced, thereby being more flexibly adapted to the installation space of the vehicle, and short-range blind zone can be greatly eliminated by overlapping of the receiving and transmitting optical paths. In addition, the detection performance can also be further improved by combining the optional examples in the aforementioned various embodiments.

### Second aspect

On-board LiDAR of rotating mirror type, for example, LiDAR of multi-sided rotating mirror type, is usually installed on the front end or side of the vehicle. For example, there is an angle difference between two sides of a two-sided mirror. The points obtained by scanning of the two sides are combined into one frame to improve the vertical resolution. FIG. 15 is a schematic diagram of scanning through frame splicing. When the frame rate is 10Hz, the time span of acquiring a point on an object in the field of view reaches 50ms. The time span of frame splicing for a three-sided mirror reaches 66.6ms, the time span of frame splicing for a four-sided mirror reaches 75ms, and so on.

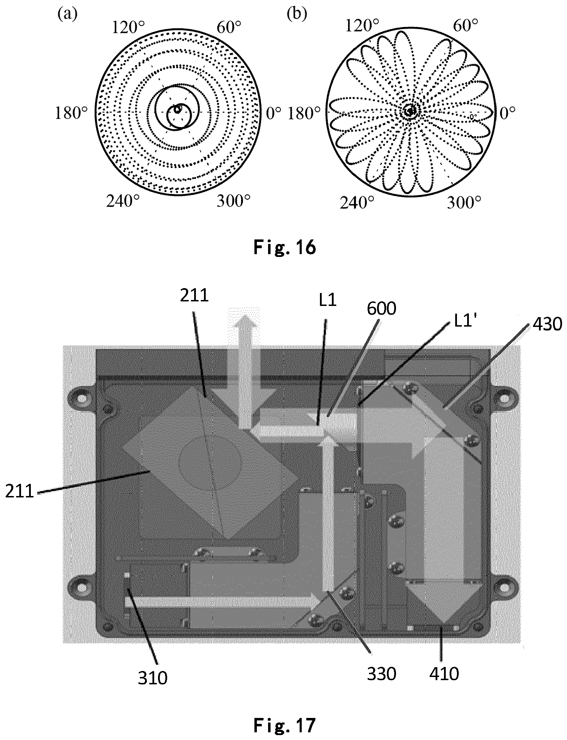

As another example, for some scanning methods without frame splicing, the single-beam two-dimensional scanning shown in FIG. 16 is taken as an example. The single-beam two-dimensional scanning is usually implemented by a fixed light source combined with a scanning device. For example, in the case of two or more prisms, the relative rotation of the prisms is used to adjust the beam's emergent position to achieve scanning. In the single-beam two-dimensional scanning method, when the frame rate is 10Hz, the time span of acquiring a point on an object in the field of view may be close to 100ms. Therefore, it takes a long time to fully cover an area, which may cause some motion blur in the entire scanned object.

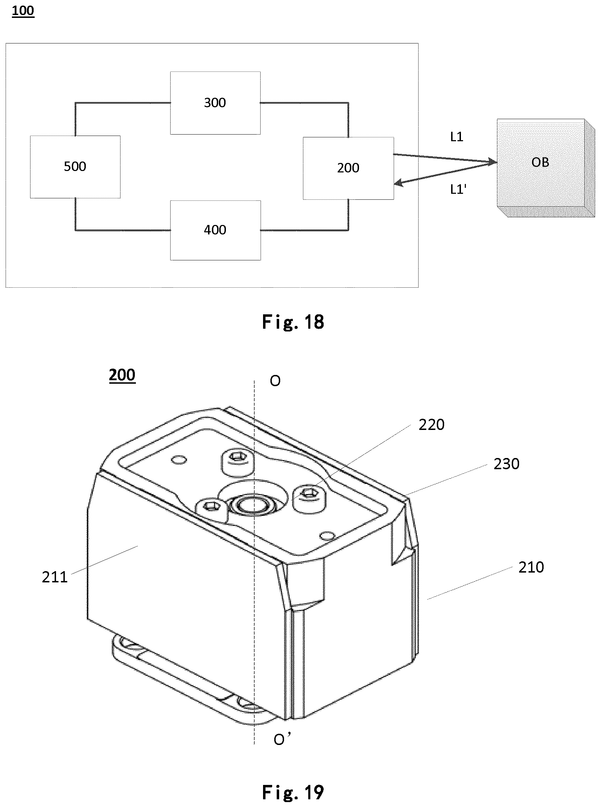

FIGs. 17 and 18 show schematic diagrams of a LiDAR 100 according to one embodiment of this disclosure. As shown in FIGS. 17 and 18, the LiDAR 100 includes a rotating mirror unit 200, an transmitting unit 300 and a receiving unit 400. The rotating mirror unit 200 includes a multi-sided rotating mirror 210 (see FIG. 19). The multi-sided rotating mirror 210 has a rotation axis OO' (see FIG. 19), can rotate around the rotation axis OO', and has multiple reflective surfaces 211 (see FIG. 17). In FIG. 17, the polygon rotating mirror 210 is exemplarily shown as having two reflective surfaces 211. This disclosure is not limited thereto, and may also have other numbers of reflective surfaces, such as 3, 4, 5 or more.

The plurality of reflective surfaces 211 are used to change the angle of the beam incident thereon, where the plurality of reflective surfaces 211 of the multi-sided rotating mirror 210 are preferably rotationally symmetrical with respect to the rotation axis. In this disclosure, "the plurality of reflective surfaces 211 of the multi-sided rotating mirror 210 are rotationally symmetrical with respect to the rotation axis" means that after the multi-sided rotating mirror 210 rotates a certain angle around its rotation axis OO', the multiple reflective surfaces 211 of the multi-sided rotating mirror 210 can still overlap with the multiple reflective surfaces 211 before rotating this angle. Taking the multi-sided rotating mirror 21 including two reflective surfaces 211 (for example, 180-degree opposites) as an example, each time the multi-sided rotating mirror 210 is rotated 180 degree, the two reflective surfaces 211 overlap once. Taking the multi-sided rotating mirror 21 being a square and including four reflective surfaces 211 as an example, each time the multi-sided rotating mirror 210 is rotated 90 degree, the four reflective surfaces 211 overlap once. Taking the multi-sided rotating mirror 21 being rectangular and including four reflective surfaces 211, each time the multi-sided rotating mirror 210 is rotated 180 degree, the four reflective surfaces 211 overlap once.

The transmitting unit 300 is configured to emit the detection beam L1. The receiving unit 400 is configured to receive the echo L1' obtained after the detection beam L1 is reflected by the object OB and convert it into an electrical signal. The subsequent processing unit can calculate information such as the distance from the object and/or reflectivity of the object according to the electrical signal. The detection beam L1 is reflected by the reflective surface 211 of the multi-sided rotating mirror 210 and then emitted, and the echo L1' reaches the receiving unit 400 after being reflected by the reflective surface 211. Moreover, the range of scanning field of view corresponding to each reflective surface 211 of the multi-sided rotating mirror 210 is the same. That is to say, during the rotation of the multi-sided rotating mirror 210, the operation angular range of each reflective surface 211 is the same. Within this range, the detection beam L1 is reflected to the outside of the LiDAR by the reflective surface, and the echo L1' is reflected by the reflective surface and then incident onto the receiving unit 400. Beyond this range, the transmitting unit 300 does not emit the detection beam L1, and the receiving unit 400 also stops receiving the echo. Alternatively, beyond this range, the processing unit can not calculate information such as the distance from the object and/or reflectivity of the object based on the electrical signal.

FIG. 18 shows a block diagram of a LiDAR according to one embodiment of this disclosure. As shown in FIG. 18, the LiDAR 100 further includes a processing unit 500, which is coupled to the receiving unit 400 and configured to acquire the electrical signal generated by the receiving unit 400 from the echo reflected by any reflective surface 211 of the rotating mirror unit 200 to generate a frame of point cloud. Therefore, according to a preferred embodiment of this disclosure, the echoes obtained from each reflective surface of the rotating mirror separately constitute a frame of point cloud, without the need of frame-splicing based on the echoes from multiple reflective surfaces. Specifically, when the LiDAR 100 is operating, the transmitting unit 300 emits a detection beam L1 to the surrounding environment through reflection by the rotating mirror unit 200, and the emitted detection beam L1 is projected on the object OB, causing scattering such that a part of the detection beam is reflected back and converged to form echo L1'. The receiving unit 400 receives the echo L1' reflected by the rotating mirror unit 200 and converts it into an electrical signal. The processing unit 500 analyzes and calculates the electrical signal to obtain the distance between the object OB and the LiDAR 100.

In addition, when the LiDAR of this disclosure is operating, not every reflective surface is used to generate a frame of point cloud. For example, only some of the reflective surfaces can be used to generate a point cloud.

According to an embodiment of this disclosure, as shown in FIG. 17, the transmitting optical axis and the receiving optical axis of the LiDAR 100 are partially coaxial. Optionally, the optical axis portions of the transmitting optical axis and the receiving optical axis in which the optical signals are emitted or incident through the rotating mirror unit 200 share the same optical axis. That is, the optical path of the detection beam L 1 after being reflected by one of the reflective surfaces 211 is the same as or parallel to the optical path of the echo L1' returned to the reflective surface 211. Alternatively, according to an alternative embodiment of this disclosure, the transmitting optical axis and the receiving optical axis are not coaxial. That is, the transmitting optical axis on which the detection beam L1 emitted by the transmitting unit 300 is emitted after being reflected by the reflective surface 211 of the multi-sided rotating mirror 210 and the receiving optical axis on which the echo L1' reaches the receiving unit 400 after being reflected by the reflective surface are independent of each other. For example, different areas on the reflective surface 211 can be used to emit the detection beam L1 and receive the echo L1' respectively. Preferably, an transmitting lens barrel and a receiving lens barrel are provided, both extending to the rotating mirror unit 200, respectively used to emit the detection beam L1 and receive the echo L1'. The axes of the transmitting lens barrel and the receiving lens barrel are independent of each other.

According to an embodiment of this disclosure, as shown in FIG. 17, the LiDAR 100 further includes a light splitting component 600. The detection beam L1 is reflected to the rotating mirror unit 200 by the light splitting component 600, and the corresponding echo L1' is transmitted through the light splitting component 600 and received by the receiving unit 400. Alternatively, the detection beam L1 is transmitted through the light splitting component 600 to the rotating mirror unit 200, and the corresponding echo L1' is reflected by the light splitting component 600 and is received by the receiving unit 400.

According to an embodiment of this disclosure, the light splitting component 600 is a transflective mirror, such as a mirror with an aperture in the middle. The light beam incident on the portion other than the aperture are reflected, and the light incident onto the aperture will be transmitted through. Alternatively, the light splitting component 600 includes a polarizing beam splitting structure, which enables the emergent and incident light beams have a phase difference of half wavelength, and transmits/reflects light beams of different wavelengths respectively.

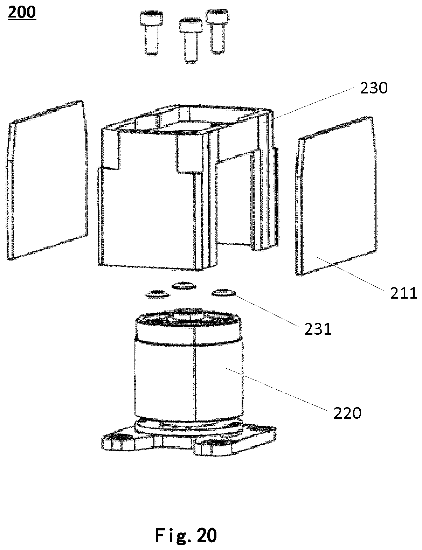

According to a preferred embodiment, by adjusting the relative angles of each mirror surface 211 of the multi-sided rotating mirror 210, the rotationally symmetrical structure of the overall multi-sided rotating mirror 210 relative to the central axis is obtained. FIG. 19 shows a schematic diagram of a rotating mirror unit according to an embodiment of this disclosure, and FIG. 20 shows an exploded view of a rotating mirror unit according to an embodiment of this disclosure. As shown in FIGs. 19 and 20, the rotating mirror unit 200 further includes a motor 220 and a rotating mirror frame 230 for accommodating the plurality of reflective surfaces 211. The motor 220 is enclosed in a polygonal space surrounded by the reflective surfaces 211 and is configured to drive the multi-sided rotating mirror 210 to rotate around its rotation axis O1. The rotating mirror frame 230 is connected to a rotor of the motor 220 and is driven by the rotor of the motor 220. Optionally, the motor 220 is an integrated motor, and the multi-sided rotating mirror 210 of the rotating mirror unit 200 is connected to the motor 220 through an elastic component 231, where the elastic component 231 is, for example, a disc spring. The mirror angles of the plurality of reflective surfaces 211 in the vertical direction are configured to be adjustable by means of the disc springs.

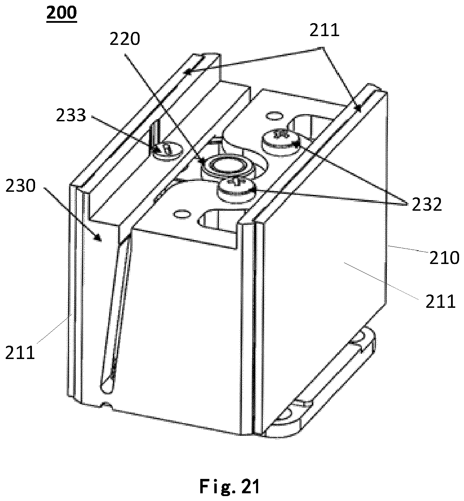

FIG. 21 shows a schematic diagram of a rotating mirror unit according to another embodiment of this disclosure. As shown in FIG. 21, the rotating mirror unit 200 includes a motor 220, a multi-sided rotating mirror 210 and a rotating mirror frame 230. The motor 220 is a split type of motor. The rotating mirror frame 230 is connected to the motor 220 by means of fixing bolts 232, and the mirror angle of the reflective surface 211 on the left side in the figure in the vertical direction is adjusted through the eccentric bolt 233. In the embodiment of FIG. 21, the multi-sided rotating mirror 210 includes two reflective surfaces 211 that are 180 degree opposite to achieve rotational symmetry.

According to an embodiment of this disclosure, as shown in FIG. 17, the transmitting unit 300 includes an transmitting module 310 and an transmitting lens group 320, where the transmitting module 310 is configured to emit a detection beam L1 that passes through the transmitting lens group 320 and the light splitting component 600 and is incident to the reflective surface 211 of the rotating mirror unit 200.

According to an embodiment of this disclosure, as shown in FIG. 17, the transmitting unit 300 further includes at least one first deflection reflector 330. The at least one first deflection reflector 330 is used to change the direction of the detection beam L1 emitted from the transmitting module 310, so that the detection beam L1 can be incident on the reflective surface 211 and directed toward the ambient environment after at least one reflection.

According to an embodiment of this disclosure, the transmitting lens group 320 includes one or more lenses disposed between the transmitting module 310 and the first deflection reflector 330. Additionally or alternatively, the transmitting lens group 320 may also include one or more transmitting lenses disposed between the first deflection reflector 330 and the light splitting component 600.

According to an embodiment of this disclosure, as shown in FIG. 17, the receiving unit 400 includes a receiving lens group 420 and a receiving module 410. After being reflected by any reflective surface 211 of the rotating mirror unit 200, the echo L1' passes through the light splitting component 600 and the receiving lens group 420 and is incident onto the receiving module 410.

According to an embodiment of this disclosure, as shown in FIG. 17, the receiving unit 400 further includes at least one second deflection reflector 430. The at least one second deflection reflector 430 is used to change the traveling direction of the echo L1' after being reflected by the reflective surface 211, so that the echo L1' can be received by the receiving module 410 after at least one reflection. By arranging the first deflection reflector 330 and the second deflection reflector 430, the structure of the transmitting unit and the receiving unit is designed to be more compact and space is saved.

According to an embodiment of this disclosure, the receiving lens group 420 includes one or more receiving lenses disposed between the light splitting component 600 and the second deflection reflector 430. Additionally or alternatively, the receiving lens group 420 may also include one or more receiving lenses disposed between the second deflection reflector 430 and the receiving module 410.

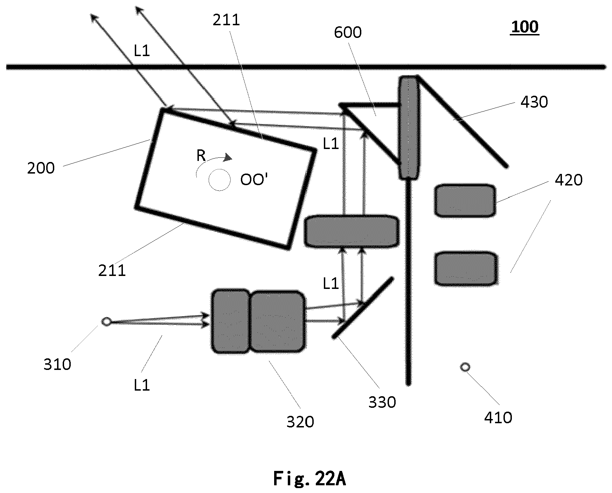

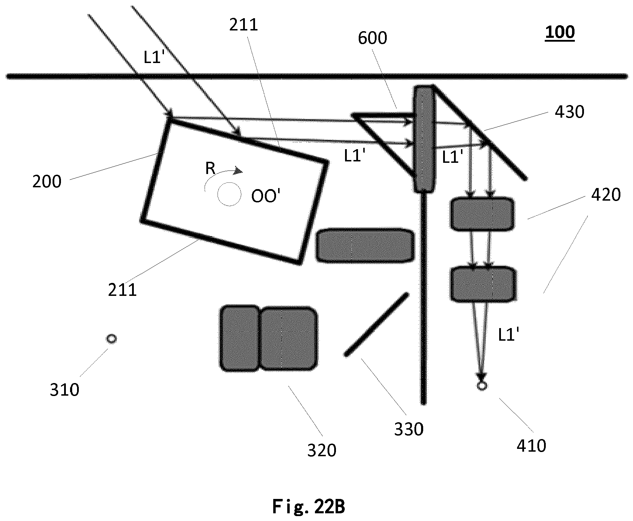

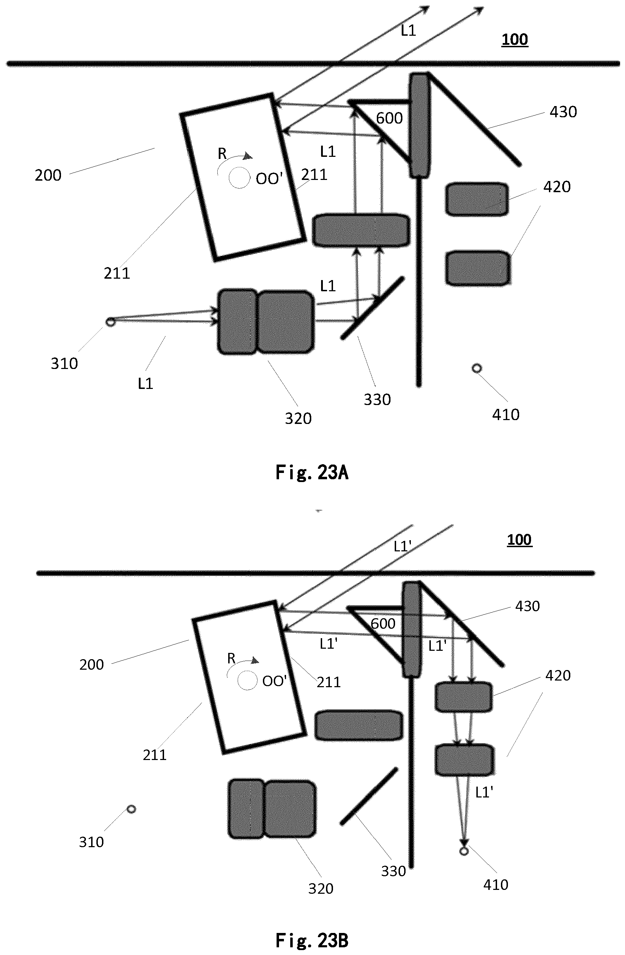

FIGs. 22A, 22B, 23A and 23B respectively show a schematic diagram of the optical path of the double-sided rotating mirror at the starting and ending scanning positions according to an embodiment of this disclosure, where a schematic diagram of the detection beam and the echo when the multi-sided rotating mirror is at the starting scanning position is shown in FIGs. 232 and 22B respectively, and a schematic diagram of the detection beam and the echo when the multi-sided rotating mirror is at the ending scanning position is shown in FIGs. 23A and 23B respectively.

As shown in FIGs. 22A, 22B, 23A and 23B, the multi-sided rotating mirror 210 includes two reflective surfaces 211 (that is, the long sides of the rectangular multi-sided rotating mirror 210 in the figure). The multi-sided rotating mirror 210 can rotate around the axis of rotation OO' in the direction indicated by arrow R. The multi-sided rotating mirror 210 rotates clockwise around the rotation axis OO' from the start scanning position shown in FIGs. 22A and 22B to the ending scanning position shown in FIGs. 23A and 23B. The scannable angle of the light beam is twice the rotation angle of the multi-sided rotating mirror 210. That is to say, from the starting scanning position shown in FIGs. 22A and 22B to the ending scanning position shown in FIGs. 23A and 23B, the multi-sided rotating mirror 210 is rotated horizontally by 60°. Correspondingly, the emergent detection beam L1 is rotated through a horizontal field of view of 120°.

According to an embodiment of this disclosure, the multi-sided rotating mirror 210 includes three or four reflective surfaces 211. Those skilled in the art can understand that the number of reflective surfaces 211 can be increased as needed. Under the same frame rate, the greater the number of reflective surfaces 211 provided, the slower the desired rotation speed of the rotating mirror unit 200, offering the advantage of more time of flight. For example, when the LiDAR 100 produces 10 frames of point clouds per second, the multi-sided rotating mirror 210 with two reflective surfaces 211 needs to rotate 5 rounds, and the multi-sided rotating mirror 210 with four reflective surfaces 211 only needs to rotate 2.5 rounds. Obviously, under the same conditions, the rotation speed of the multi-sided rotating mirror 210 with four reflective surfaces 211 can be selected to be slower, thereby allocating more measurement time for each reflective surface 211, and thus offering the advantage of more time of flight, thus enabling better long-range measurement performance.

According to an embodiment of this disclosure, the transmitting module 310 includes a plurality of lasers 311 arranged in a linear array or an area array, and the receiving unit 400 includes a plurality of photodetectors 311 with the same number and corresponding arrangement as the lasers 311. Each photodetector corresponds to one of the lasers 311 and is configured to receive the echo L1' of the detection beam emitted by the corresponding laser 311 after being reflected off the object OB. Optionally, the plurality of lasers 311 can be arranged in a variety of ways, such as single column, double columns, zigzag staggered arrangement, etc., and the photodetectors are arranged correspondingly according to the arrangement of the lasers 311. The number of beams can vary according to the actually required scanning accuracy. For example, multi-beam transceiver modes such as 32 beams, 64 beams, and 128 beams can be used to achieve higher measurement accuracy.

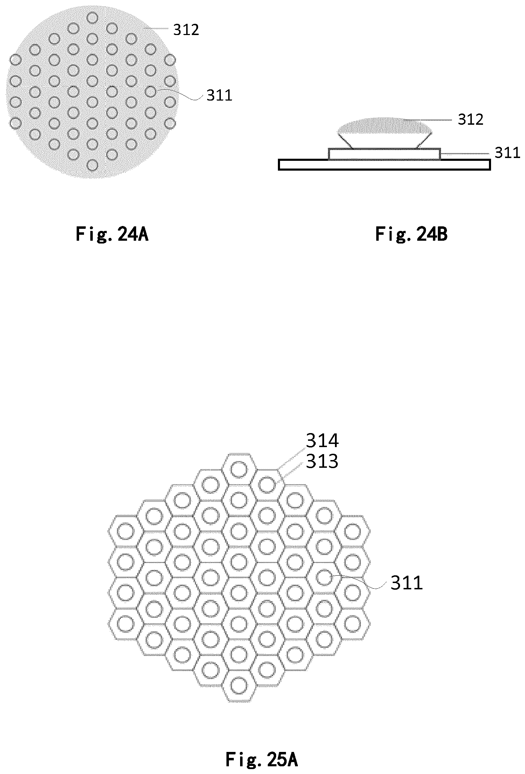

FIGs. 24A and 24B show a schematic diagram of a microlens provided on a laser according to an embodiment of this disclosure. As shown in FIGs. 24A and 24B, the plurality of lasers 311 include at least one laser 311 provided with a microlens 312. By providing the microlens 312 on the at least one laser 311, the collimation effect of the detection beam L1 can be improved, the horizontal angle constraint can be achieved, and the utilization of light energy can be improved.

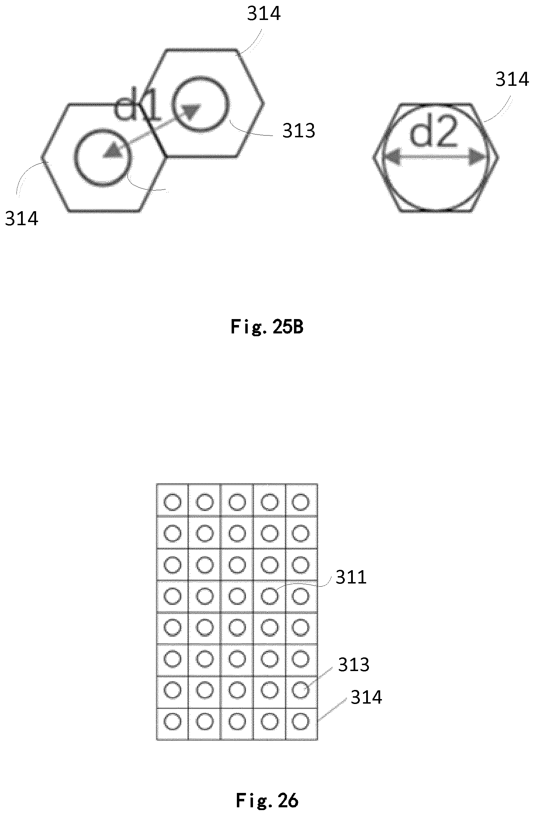

According to an embodiment of this disclosure, the laser 311 provided with microlens includes a plurality of light emitting points 313, and each light emitting point 313 has a corresponding microlens structure 314. Optionally, the laser 311 is a Vertical Cavity Surface Emitting Laser (VCSEL). Compared with the Edge Emitting Laser (EEL) currently widely used in LiDAR, the Vertical Cavity Surface Emitting Laser (VCSEL) has the advantage of spatially symmetric distribution of divergence angles. VCSELs are used in LiDAR. LiDAR's requirements for high peak power have led more and more VCSELs to use three-layer junction and five-layer junction quantum well structures to increase emission power. However, due to the large divergence angle of VCSEL, the transmission power density still cannot be significantly improved. Most of the existing VCSEL collimation solutions use a single large-aperture lens to collimate the entire VCSEL, which results in an increase in the equivalent light-emitting surface and a reduction in power density. In the embodiment of this disclosure, a separate or directly imprinted micro-lens array (MLA for short) is added to the light-emitting surface of the VCSEL. Unlike the solution of collimating the entire VCSEL through one lens, each lens unit in the microlens structure 314 of this embodiment respectively collimates the laser beam emitted by each light emitting point 313, and the shape of the microlens is designed according to the arrangement of the light emitting points 313. FIG. 25A shows a schematic diagram of a microlens structure arranged on the light emitting point of a laser according to an embodiment of this disclosure, and FIG. 25B shows the preferred size relationship of the embodiment in FIG. 25A. As shown in FIG. 25A, the laser 311 includes a plurality of light emitting points 313 distributed in a hexagonal shape. Correspondingly, each of the microlens structures 314 is also configured as a hexagonal structure. In the case of commonly used circular lenses, it is difficult to achieve dense arrangement of circular lens units, part of the detection beam will pass through the gap, this part of the beam cannot be collimated, and part of the power density will be lost. As shown in FIGs. 25A and 25B, the hexagonal microlens structure 314 is arranged to match the light emitting points 313. The length of the diameter d2 of the inscribed circle of the hexagonal microlens structure 314 is the distance d1 between the centers of the adjacent light emitting points 313 (that is, the distance between the centers of the light-transmitting units in the VCSEL), that is, d1=d2, achieving dense distribution and improves the utilization of light energy in the VCSEL. Alternatively, the surface type of the lens can be designed to be plano-convex according to the collimation requirements, and its convex side can be spherical or aspherical. Additionally or alternatively, an anti-reflection membrane of VCSEL wavelength can be coated on the flat and convex surfaces of the MLA or either surface to improve the transmittance.

According to an embodiment of this disclosure, the microlens structure 314 is arranged corresponding to the arrangement pattern of each light emitting point 313. FIG. 26 shows a schematic diagram of a microlens structure arranged on the light emitting point of a laser according to another embodiment of this disclosure. As shown in FIG. 26, the laser 311 includes a plurality of light emitting points 313 distributed in a quadrilateral shape. Correspondingly, each of the microlens structures 314 is also configured as a quadrilateral structure. In the same way, for the pentagonally distributed light emitting points, a corresponding pentagonal microlens structure is provided, and so on, which are not be described again herein.

According to an embodiment of this disclosure, the overall FOV angular span of the transmitting unit 300 in the horizontal direction is less than or equal to 10 degree. Optionally, the FOV angular span of the transceiver channel in the horizontal direction is controlled by designing the transceiver line array to be as narrow as possible in the horizontal direction and the focal length as long as possible, so as to avoid excessive horizontal angles, which affects the cross-code plate rotation angle and thus the next scanning.

This disclosure further relates to a detection method for a LiDAR, which uses the LiDAR 100 for detection. According to an embodiment of this disclosure, the transmitting module 310 includes multiple lasers 311 arranged in a linear array or an area array. The multiple lasers 311 are divided into multiple banks, and respective banks of lasers are activated in one batch or in multiple batches at each detection angle. Through multiple detections within the horizontal angle range, a point cloud combination arranged in a linear array or an area array is obtained, and a frame of point cloud within the field of view is generated based on the point cloud combination.

According to an embodiment of this disclosure, lasers divided into multiple banks and arranged in linear arrays are used during detection, respective banks of detectors are sequentially activated at each detection angle to obtain a linear array of point cloud, and a frame of point clouds is generated according to the line array of point cloud at each detection angle.

According to an embodiment of this disclosure, during detection, one or more banks of lasers are activated multiple times with different energies at some detection angles, thereby obtaining short-range and long-range point cloud information, and generating a frame of point clouds based on the point cloud information.

The advantages of the embodiments of this disclosure are specifically described below by way of examples. Taking an obstacle with a size of 2m*2m*2m located 50m away from the LiDAR 100 as an example, the obstacle moves at a speed of 100km/h relative to the LiDAR 100.

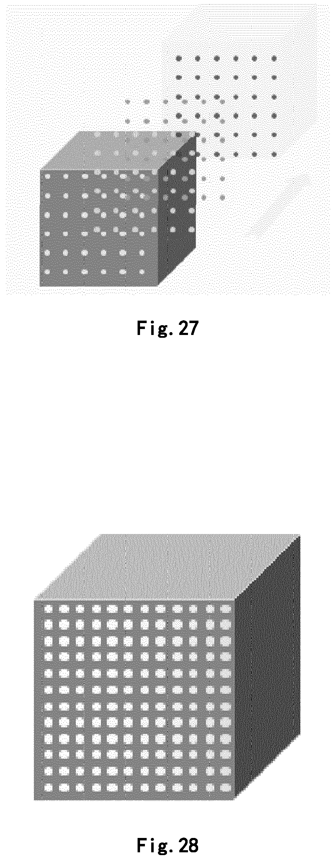

FIG. 27 shows a schematic diagram of the motion distortion produced when using a single-beam two-dimensional scanning. As shown in FIG. 28, when single-beam two-dimensional scanning is employed, taking a frame rate of 10Hz for 100ms to obtain a frame of image as an example, the time difference between the earliest point to be incident onto the obstacle and the latest point to be incident onto the obstacle in a single frame can be up to 100ms. Considering the moving speed of the obstacle of 100km/h, the moving distance of the obstacle in 100ms is 2.8 meters. That is to say, under this scanning method, the obstacle's distortion reaches 2.8 meters.

FIG. 28 shows a schematic diagram of the motion distortion produced when using multi-beam one-dimensional scanning. As shown in FIG. 28, under the same situation, multi-beam one-dimensional scanning is employed, the 2m width of the obstacle occupies a horizontal field of view angle of approximately 2.3° at a distance of 50m, and the horizontal scanning field of view range is 120°. In the case of a 10HZ frame rate, the time to scan this angle is 33ms*(2.3/120)=0.63ms. At this time, the moving distance of the obstacle is 0.0175m.

It is obvious from he above comparison that the use of multi-beam one-dimensional scanning can better reduce the motion distortion that exists in LiDAR during measurement.

To sum up, this disclosure uses a one-dimensional scanning LiDAR of rotating mirror type without frame splicing to generate a complete frame of point cloud from the point cloud information obtained from each mirror surface of the LiDAR of rotating mirror type, thereby completing scanning of the entire field of view. The motion blur effect that exists during LiDAR measurement is significantly suppressed, the object's shape distortion caused by moving objects during measurement is distinctly reduced, and the measurement accuracy of LiDAR is improved.

The foregoing embodiments only illustrate the principles and effects of this disclosure, but are not used to limit this disclosure. Those skilled in the art can modify or change the above embodiments without departing from the spirit and scope of this disclosure. Therefore, all equivalent modifications or changes made by those with ordinary knowledge in the technical field without departing from the spirit and technical ideas disclosed in this disclosure shall be covered by the claims of this disclosure.

## Claims

1. A light detection device, comprising:
a window;
a light transmitting end comprising a light emitter array configured to output an transmission signal, the light emitter array comprising N columns of light emitters that are staggered from each other, and each column of the light emitters extending in a first direction, where N> 1;
a light detecting end comprising a light detector array configured to detect an echo signal of the transmission signal after being reflected off an obstacle; the light detector array comprising M columns of light detectors staggered from each other, and each column of light detectors extending in the first direction, where M>1; the light emitter array and the light detector array constituting a plurality of detection channels to scan a field of view in the first direction, and each of the detection channels comprising at least one light emitter and at least one light detector, each of the detection channels corresponding to one field of view in the first direction; and
an optical signal redirection component configured to deflect the transmission signal through movement, that the transmission signal is emitted from the window of the light detection device to scan a field of view in a second direction and configured to redirect the echo signal to transmit the echo signal to the light detecting end;
wherein an optical path for the transmission signal and an optical path of the echo signal overlap at least between the window and the optical signal redirection component.

2. The light detection device according to claim 1, wherein,
the light emitter in the light emitter array is a vertical cavity surface emitting laser with a micro-lens array for collimating the transmission signal.

3. The light detection device according to claim 2, wherein each of the light emitters comprises a plurality of light-transmitting units, and the micro-lens units in the micro-lens array correspond to the light-transmitting units in a one-to-one correspondence and match in shape.

4. The light detection device according to claim 2, wherein the micro-lens array is arranged separately with respect to the light emitter, or is imprinted on a light emitting surface of the light emitter.

5. The light detection device according to claim 2, wherein the light emitter is a Back-Side Illumination semiconductor structure, and the micro-lens array is imprinted on a surface of a substrate of the semiconductor structure.

6. The light detection device according to claim 2, wherein, in a signal transmission process from sending the transmission signal to detecting the corresponding echo signal, a plurality of optical signal transmission detection channels in an operation state are respectively formed between a plurality of light emitters activated in the light emitter array and a plurality of light detectors activated in the light detector array; the light emitter array comprises a plurality of banks of light emitters and/or the light detector array comprises a plurality of banks of light detectors; the activated light emitters respectively belong to different banks of light emitters and/or the activated light detectors respectively belong to different banks of light detectors.

7. The light detection device according to claim 6, wherein each light emitter in each bank of light emitters and/or each light detector in each bank of light detectors is activated in turn during a plurality of signal transmission processes.

8. The light detection device according to claim 7, wherein, after performing a long-range measurement in a preset number of signal transmission processes, the light detection device performs a short-range measurement in the next signal transmission process.

9. The light detection device according to claim 8, wherein a first number of light emitters in a middle area of the light emitter array in the first direction are activated during the long-range measurement, and a second number of light emitters are activated during the short-range measurement, wherein the first number is greater than the second number.

10. The light detection device according to claim 8, wherein there are a plurality of detection distances corresponding to the long-range measurement, and wherein the closer a position of the activated light emitter in the light emitter array to the center, the farther the corresponding expected detection distance.

11. The optical detection device according to claim 8, wherein the signal characteristics of the optical signals transmitted in respective detection channels operating in the same signal transmission process are different.

12. The light detection device according to claim 11, wherein the transmission signal comprises one or more pulse signals, and dimensions of the signal characteristics comprise one or any combination of: wavelength, pulse width, pulse number, pulse peak and pulse time interval.

13. The light detection device according to claim 1, wherein the light emitter array and the light detector array are cooperatively configured to reach an number of beams equal to or more than 32 beams.

14. The light detection device according to claim 1, wherein the optical signal redirection component comprises:
a rotating member controlled to rotate and comprising at least one reflective surface adapted to receive echo signals and/or output transmission signals;
a first redirecting member located in the optical path for the transmission signal and the optical path for the received signal, configured to output one of the transmission signal and the echo signal to the rotating member, provided with a passage portion to allow the other of the echo signal and the transmission signal to pass therethrough.

15. The light detection device according to claim 14, wherein the passage portion comprises one or more gaps formed on the side and/or in the middle of the first redirecting member.

16. The light detection device according to claim 14, wherein the first redirecting member comprises: a first area for outputting the transmission signal to the rotating member, and a second area outside the first area for transmitting the echoe signal.

17. The light detection device according to claim 16, further comprising: a light shielding member disposed on a propagation path of the transmission signal that transmits the first redirecting member.

18. The light detection device according to claim 14, wherein at least a portion of an end surface of an end of the first redirecting member away from the rotating member is configured as a first reflective surface; a first preset included angle between the first reflective surface and an axis of a first optical path segment leading to the first redirecting member in the optical path for the transmission signal are configured to deviate a optical signal transmitted along the first optical path segment from the optical path for the received signal; and/or, at least part of the end surface of the end of the first redirecting member away from the rotating member is configured as a second reflective surface; a second preset included angle between the second reflective surface and an axis of a second optical path segment starting from the first redirecting member in the optical path for received signal are configured to deviate the optical signal transmitted along the second optical path segment from the optical path for the transmission signal.

19. The light detection device according to claim 14, wherein an end surface of an end of the first redirecting member close to the rotating member is configured to be parallel to an axial direction of the optical path segment of the optical path for the received signals between the rotating member and the first redirecting member.

20. The light detection device according to claim 14, wherein the rotating member comprises two or more than two reflective surfaces.

21. The light detection device according to claim 14, wherein the first redirecting member is packaged in a first sheath, and the first sheath extends toward the light transmitting end along the optical path for transmission signal.

22. The light detection device according to claim 14, wherein the size of the first redirecting member is proportional to a divergence angle of an emergent beam and inversely proportional to a cross section of the echo beam.

23. The light detection device according to claim 14, comprising: a transceiver lens, arranged between the rotating member and the first redirecting member, for converging the echo signals from one side of the rotating member and transmitting them toward the passage portion of the first redirecting member and allowing the transmission signals from a side of the first redirecting member to pass therethrough.

24. The light detection device according to claim 14, wherein the light transmitting end corresponds to an end of a second sheath, and the second sheath extends toward the first redirecting member along the optical path for the transmission signal, and forms a light output port at the other end thereof;
and/or, the light detecting end corresponds to an end of a third sheath, and the third sheath extends toward the first redirecting member along the optical path for the received signal, and forms a light input port at the other end thereof.

25. The light detection device according to claim 14, comprising: a second lens disposed in the optical path for the received signals and located between the light detecting end and the first redirecting member.

26. The light detection device according to claim 25, wherein the second lens is erected along a direction with a predetermined deviation angle relative to a longitudinal direction of the light detection device to deflect light incident at a marginal FOV angle to deviate from the light detector array.

27. The light detection device according to claim 14, comprising a control module for compensating the echo signal received from a light transmission detection channel corresponding to the corresponding FOV angle away from the rotating member.

28. The light detection device according to claim 1, wherein the light detection device is a forward-facing LiDAR, where M=N>32.

29. A traveling vehicle, comprising the light detection device according to any one of claims 1 to 28.

30. The traveling vehicle according to claim 29, wherein the traveling vehicle is a car, and the light detection device is a forward-facing LiDAR installed on a front of the vehicle.

31. A LiDAR, comprising:
a rotating mirror unit comprising a multi-sided rotating mirror that can rotate around a rotation axis and has a plurality of reflective surfaces for changing an angle of a light beam incident thereon;
an transmitting unit configured to emit a detection beam; and
a receiving unit configured to receive an echo of the detection beam reflected off an object;
wherein the detection beam is reflected by the reflective surface of the multi-sided rotating mirror and then emitted; the echo reaches the receiving unit after being reflected by the reflective surface; and a scanning FOV range corresponding to each reflective surface of the multi-sided rotating mirror is the same.

32. The LiDAR according to claim 31, further comprising a processing unit, the processing unit being coupled to the receiving unit and configured to obtain an electrical signal generated by the receiving unit based on the echo reflected by any one reflective surface to generate a frame of point cloud, and the plurality of reflective surfaces of the multi-sided rotating mirror are rotationally symmetrical with respect to the rotation axis.

33. The LiDAR according to claim 31 or 32, wherein an transmitting optical axis and a receiving optical axis are partially coaxial.

34. The LiDAR according to claim 33, further comprising a light splitting component, the detection beam is reflected to the rotating mirror unit by the light splitting component, and the corresponding echo is transmitted through the light splitting component and received by the receiving unit; or the detection beam is transmitted to the rotating mirror unit through the light splitting component, and the corresponding echo is reflected by the light splitting component and received by the receiving unit.

35. The LiDAR according to claim 31 or 32, wherein an transmitting optical axis in which the detection beam emitted by the transmitting unit is emitted after being reflected by the reflective surface of the multi-sided rotating mirror is independent from a receiving optical axis in which the echo reaches the receiving unit after reflection by the reflective surface.

36. The LiDAR according to claim 31 or 32, wherein the rotating mirror unit further comprises a motor and a rotating mirror frame for accommodating the plurality of reflective surfaces, the motor being accommodated in a polygonal space surrounded by the reflective surfaces to drive the multi-sided rotating mirror to rotate around its rotation axis, wherein the angle of at least one of the plurality of reflective surfaces is adjustable to realize rotational symmetry of the plurality of reflective surfaces of the rotating mirror unit about the central axis.

37. The LiDAR according to claim 31 or 32, wherein mirror angles of the plurality of reflective surfaces of the multi-sided rotating mirror in a vertical direction are configured to be adjustable.

38. The LiDAR according to claim 31 or 32, wherein the transmitting unit comprises an transmitting module and an transmitting lens group; the transmitting module is configured to emit a detection beam, and the detection beam passes through the transmitting lens group and the light splitting component and is emitted to the reflective surface of the rotating mirror unit.

39. The LiDAR according to claim 38, wherein the transmitting unit further comprises at least one first deflecting reflector, and the transmitting lens group comprises a plurality of transmitting lenses disposed between the transmitting module and the first deflecting reflector and between the first deflecting reflector and the light splitting component.

40. The LiDAR according to claim 38, wherein the receiving unit comprises a receiving lens group and a receiving module, and the echo passes through the light splitting component and the receiving lens group and is incident onto the receiving module after being reflected by any reflective surface of the rotating mirror unit.

41. The LiDAR according to claim 40, wherein the receiving unit further comprises at least one second deflecting reflector, and the receiving lens group comprises a plurality of receiving lenses disposed between the light splitting component and the second deflection reflector and between the second deflecting reflector and the receiving module.

42. The LiDAR according to claim 31 or 32, wherein the multi-sided rotating mirror comprises two, three or four reflective surfaces.

43. The LiDAR according to claim 40, wherein the transmitting module comprises a plurality of lasers arranged in a linear array or an area array, and the receiving unit comprises a plurality of photodetectors having the same number and corresponding arrangement as the lasers, wherein each photodetector corresponds to one of the lasers and is configured to receive the echo of the detection beam emitted by the corresponding laser and reflected off the object.

44. The LiDAR according to claim 43, wherein the plurality of lasers comprises at least one laser provided with a microlens.

45. The LiDAR according to claim 43, wherein the laser provided with the microlens comprises a plurality of light emitting points, and each light emitting point has a corresponding microlens structure.

46. The LiDAR according to claim 45, wherein a plurality of the microlens structures are arranged corresponding to an arrangement pattern of a plurality of the light emitting points.

47. The LiDAR according to claim 31 or 32, wherein an overall span of the FOV angle of the transmitting unit in a horizontal direction is not greater than 10 degrees.

48. A detection method for a LiDAR, the detection method adopts the LiDAR according to any one of claims 31-47 for detection.

49. The detection method according to claim 48, wherein the transmitting module comprises a plurality of lasers arranged in a linear array or an area array, the plurality of lasers are divided into a plurality of banks, each bank of lasers is activated at each detection angle in one batch or in multliple batches to obtain a point cloud combination arranged in the linear array or the area array, and a frame of point cloud is generated based on the point cloud combination.

50. The detection method according to claim 49, wherein different energies are used to activate one or more groups of lasers a plurality of times at some detection angles, thereby obtaining short-range and long-range point cloud information, and a frame of point cloud is generated based on the point cloud information.
